(19) **Europäisches Patentamt / European Patent Office / Office européen des brevets**

(11) **EP 2 248 857 B1**

(12) # EUROPEAN PATENT SPECIFICATION

(45) Date of publication and mention of the grant of the patent:
**10.04.2013 Bulletin 2013/15**

(21) Application number: **09715586.5**

(22) Date of filing: **06.01.2009**

(51) Int Cl.:
*C08J 9/14* (2006.01)        *C08G 18/40* (2006.01)
*C08G 18/48* (2006.01)        *C09D 175/04* (2006.01)
*C08G 18/12* (2006.01)        *C08G 18/10* (2006.01)
*C08G 18/08* (2006.01)        *C08J 5/18* (2006.01)
*C08G 18/73* (2006.01)        *C08G 18/75* (2006.01)

(86) International application number:
**PCT/JP2009/050019**

(87) International publication number:
**WO 2009/107404 (03.09.2009 Gazette 2009/36)**

(54) **PROCESS FOR PRODUCING ALCOHOL SOLUBLE URETHANE RESIN COMPOSITION, POLYURETHANE POROUS BODY, AND MOISTURE PERMEABLE FILM**

VERFAHREN ZUR HERSTELLUNG EINER ALKOHOLLÖSLICHEN URETHANHARZZUSAMMENSETZUNG, PORÖSER POLYURETHANKÖRPER UND FEUCHTIGKEITSDURCHLÄSSIGER FILM

PROCÉDÉ DE FABRICATION D'UNE COMPOSITION DE RÉSINE D'URÉTHANE SOLUBLE DANS LES ALCOOLS, CORPS POREUX DE POLYURÉTHANE ET FILM PERMÉABLE À L'HUMIDITÉ

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **25.02.2008 JP 2008042789**
**18.09.2008 JP 2008239289**
**18.09.2008 JP 2008239290**
**18.09.2008 JP 2008239291**

(43) Date of publication of application:
**10.11.2010 Bulletin 2010/45**

(73) Proprietor: **DIC Corporation**
**Tokyo 174-8520 (JP)**

(72) Inventors:
• **GOTOH, Naotaka**
**Takaishi-shi**
**Osaka 592-0001 (JP)**

• **MAEDA, Ryo**
**Takaishi-shi**
**Osaka 592-0001 (JP)**

(74) Representative: **Inspicos A/S**
**Kogle Allé 2**
**P.O. Box 45**
**2970 Hørsholm (DK)**

(56) References cited:
DE-A1- 19 914 879        JP-A- 1 170 658
JP-A- 10 168 302        JP-A- 11 263 822
JP-A- 60 044 549        JP-A- 2002 256 047
JP-A- 2004 115 597        JP-A- 2005 041 898
JP-A- 2005 139 319        JP-A- 2005 179 422
US-A1- 2006 189 234        US-A1- 2007 129 527

Remarks:
The file contains technical information submitted after the application was filed and not included in this specification

**Description**

TECHNICAL FIELD

The present invention relates to a process for producing an alcohol-soluble urethane resin composition, a polyurethane porous body using the alcohol-soluble urethane resin composition and a moisture-permeable film using an alcohol-soluble urethane resin composition for moisture-permeable film.

BACKGROUND ART

Urethane resin compositions have hitherto been used for various applications, for example, artificial leathers, synthetic leathers, films, coating agents, adhesives and the like. In particular, organic solvent based urethane resin compositions are used chiefly for artificial leathers, synthetic leathers, films and the like, and, for example, dimethylformamide (DMF), methyl ethyl ketone (MEK), toluene, alcohols and the like have been used singly or in admixture as the organic solvent.

However, since there is a concern that the use of the foregoing organic solvent seriously affects a living body or environment, it is the actual situation that restraints regarding various items such as the kind, use amount, recovery method, disposal method and the like of a useful solvent are being established and becoming severe year by year.

For that reason, urgent environmental countermeasures are eagerly demanded, and up to date, there have been made studies for realizing weak solvent-containing, aqueous or solvent-free urethane resin compositions. For example, in the case of using, as a single solvent, only an alcohol which is a weak solvent, there have been expected to bring such effects that (1) an existent working process of an organic solvent based polyurethane resin (for example, a dry film deposition method, a wet film deposition method, etc.) is applicable; (2) solvent recovery and solvent recycling due to unification of the solvent can be efficiently carried out, thereby making the process economical.

On the other hand, though urethane resin compositions using, as a single solvent, only an alcohol which is a weak solvent, have hitherto been used as a vehicle for printing inks or for coating of a manicure, etc., such urethane resin compositions are inferior in solvent resistance to various solvents inclusive of alcohol resistance and chemical resistance with respect to films after processing, and therefore, it was difficult from the standpoint of practical use to use them for applications such as synthetic leathers or artificial leathers, films and the like.

As remedial measures for the foregoing problems, for example, there has been made an attempt to use a polyfunctional isocyanate jointly with a polyurethane resin to allow a crosslinking reaction to proceed, thereby enhancing solvent resistance or chemical resistance. However, according to such a method, though a performance of the polyurethane resin is slightly enhanced due to the crosslinking, the polyfunctional isocyanate causes a side reaction with an organic solvent, and therefore, a practically sufficient performance was hardly obtained.

In this respect, the "artificial leathers" or "synthetic leathers" as referred to in the invention mean sheet-shaped materials in a form of a combination of a urethane resin composition with a nonwoven fabric, a woven fabric, a knitted fabric or the like.

Up to date, there have been made the following proposals as specific countermeasures. Films as well as artificial leathers and synthetic leathers obtained by filling or laminating a crosslinkable polyurethane resin composition composed of a polyurethane resin having a hydrolyzable silyl group in a side chain and/or an end of a molecule thereof and an organic solvent are known. It is said that by performing wet film deposition or dry film deposition using such a crosslinkable polyurethane resin composition, crosslinking by a hydrolysis reaction and a condensation reaction of the hydrolyzable silyl group proceeds to form a polyurethane resin film having a network structure; this film is relatively good in solvent resistance and chemical resistance; and films as well as artificial leathers and synthetic leathers and the like using the same can be utilized for, for example, clothes, sport shoes, automobile seats, furniture and the like (see, for example, Patent Document 1).

However, the crosslinkable polyurethane resin composition used in Patent Document 1 involves problems that (1) its storage stability is poor so that single use thereof is difficult; and (2) since it uses a strong solvent such as DMF and the like, when coated on a dry porous layer or a wet porous layer, there is a concern that such a porous layer is dissolved or broken, and it is difficult to utilize such a crosslinkable polyurethane resin composition as, for example, a surface film layer, a surface treating agent, an adhesive layer, etc. Thus, it was still insufficient from the standpoint of performance to use such a crosslinkable polyurethane resin composition for applications such as artificial leathers or synthetic leathers, films and the like.

Also, as remedial measures for the above-cited Patent Document 1, there is known a polyurethane resin composition containing, as essential components, a polyurethane resin having a hydrolyzable silyl group in a side chain and/or an end of a molecule thereof, a polyurethane resin not having a hydrolyzable silyl group and an organic solvent. Such a polyurethane resin composition is a mixture of a polyurethane resin capable of being crosslinked with moisture and a polyurethane resin which does not cause crosslinking, and it is said that as compared with a resin composition composed of only a polyurethane resin capable of being crosslinked as in the above-cited Patent Document 1, such a polyurethane resin composition is relatively good in performances such as solvent resistance, chemical resistance, storage stability of a compounded liquid, cleaning and removal properties of a gelated film and the like and can be utilized for artificial leathers or synthetic leathers, films and the like (see, for example, Patent Document 2).

However, the polyurethane resin composition disclosed in Patent Document 2 involves problems that (1) even when the polyurethane resin not having a hydrolyzable silyl group is used jointly, its storage stability is still inferior from the standpoint of practical use; (2) since it uses a strong solvent such as DMF and the like, when coated on a dry porous layer or a wet porous layer, there is a concern that such a porous layer is dissolved or broken, and it is difficult to utilize such a polyurethane resin composition as, for example, a surface film layer, a surface treating agent, an adhesive layer, etc. Thus, it was also still insufficient from the standpoint of performance to use such a polyurethane resin composition for wide-ranging applications such as artificial leathers or synthetic leathers, films and the like.

Furthermore, there is known a polyurethane based resin composition including a polyurethane resin containing an alkoxysilane group in a side chain thereof and a hydrolyzable metal alkoxide compound or a polymer thereof dissolved in a solvent containing an alcohol. In such a polyurethane based resin composition, it is said that in view of the fact that the polyurethane resin has an alkoxysilane group in a side chain thereof, its compatibility with an inorganic component is improved so that mechanical physical properties become good, a cured coating film with a high degree of crosslinking can be easily formed by a thermal treatment, by jointly using an alcohol as the solvent, good storage stability at room temperature is obtained, and such a polyurethane based resin composition can be utilized for, for example, adhesives, paints, coating agents and the like (see, for example, Patent Document 3).

However, the polyurethane based resin composition disclosed in Patent Document 3 involved problems that (1) since two or more kinds of solvents are used jointly at the time of production, treatment steps of solvent recovery and recycling becomes complex, and works become complicated; (2) since a large amount of a water-insoluble organic solvent such as MEK and the like is contained in addition to the alcohol, the formation of a porous layer by a wet film deposition mode is liable to become incomplete so that good films are not obtained.

In the light of above, there has been earnestly desired the development of a process for producing an alcohol-soluble urethane resin composition which is excellent in storage stability during custody but which by adding water and a catalyst thereto at the time of use, coating the mixture and drying the coating at ordinary temperature or by heating to allow a crosslinking reaction to proceed, thereby forming a dry film, is capable of obtaining excellent characteristics such as solvent resistance (for example, alcohol resistance), chemical resistance (for example, DMF resistance), heat resistance, elongation and the like; and a polyurethane porous body and a moisture-permeable film each using an alcohol-soluble urethane resin composition obtained by the production process.

Patent Document 1: JP-A-10-60783

Patent Document 2: JP-A-11-60936

Patent Document 3: JP-A-2001-270985

DISCLOSURE OF THE INVENTION

PROBLEMS THAT THE INVENTION IS TO SOLVE

An object of the invention is to provide a process for producing an alcohol-soluble urethane resin composition which is excellent in storage stability in an alcohol during custody but which by adding water and a catalyst to the system during actual use, coating the mixture and drying the coating at ordinary temperature or by heating to allow a crosslinking reaction to proceed, thereby forming a film, is capable of obtaining excellent characteristics required for applications when used for, for example, synthetic leathers or artificial leathers, polyurethane porous bodies, moisture-permeable films and the like, such as solvent resistance (for example, alcohol resistance), chemical resistance (for example, DMF resistance), heat resistance, elongation and the like.

Also, an object of the invention is to provide a polyurethane porous body using an alcohol-soluble urethane resin composition obtained by the foregoing production process.

Also, an object of the invention is to provide a moisture-permeable film obtained by performing film deposition using an alcohol-soluble urethane resin composition for moisture-permeable film which is obtained by the production process of an alcohol-soluble urethane resin composition for moisture-permeable film.

MEANS FOR SOLVING THE PROBLEMS

In order to solve the foregoing problems, the present inventors made extensive and intensive investigations. As a result, it has been found that an alcohol-soluble urethane resin composition which is excellent in storage stability in an alcohol during custody but which by adding water and a catalyst to the system during actual use, coating the mixture and drying the coating at ordinary temperature or by heating to allow a crosslinking reaction to proceed, thereby forming a film, is capable of revealing excellent characteristics required when used for, for example, synthetic leathers or artificial leathers, polyurethane porous bodies, moisture-permeable films, such as solvent resistance (for example, alcohol resistance), chemical resistance (for example, DMF resistance), heat resistance, elongation and the like can be obtained by a process including, as a first step, synthesizing a urethane prepolymer having an isocyanate group in a molecular end thereof and, as a second step to be subsequently performed, using a combination of a diamine, a specified silane coupling agent, an alcohol having a specified carbon atom number range, and the urethane prepolymer, leading to accomplishment of the invention.

That is, the invention is concerned with a process for producing an alcohol-soluble urethane resin composition comprising, as a first step, allowing a polyisocyanate (v) and at least one compound (w) having an active hydrogen-containing group selected from polyether polyols, polyester polyols and polycarbonate polyols to react in the absence of a solvent, thereby synthesizing a urethane prepolymer (x) having an isocyanate group in a molecular end thereof; and, as a second step to be subsequently performed, carrying out any one method selected from the following methods:

(Method 1) a method of adding the urethane prepolymer (x) to a mixture composed of a diamine (y), at least one coupling agent (z) selected from a monoamine silane coupling agent, a diamine silane coupling agent and a monoisocyanate silane coupling agent and at least one alcohol (B) selected from alcohols having from 1 to 7 carbon atoms to allow the mixture to react, thereby synthesizing a polyurethane resin (A) having a hydrolyzable silyl group in a molecular end or side chain thereof,

(Method 2) a method of adding the urethane prepolymer (x) to a mixture composed of a diamine (y) and at least one coupling agent (z) selected from a monoamine silane coupling agent, a diamine silane coupling agent and a monoisocyanate silane coupling agent to allow the mixture to react, thereby synthesizing a polyurethane resin (A) having a hydrolyzable silyl group in a molecular end or side chain thereof and then dissolving the polyurethane resin (A) in at least one alcohol (B) selected from alcohols having from 1 to 7 carbon atoms, and

(Method 3) a method of adding a diamine (y) and at least one silane coupling agent (z) selected from a monoamine silane coupling agent, a diamine silane coupling agent and a monoisocyanate silane coupling agent to a mixture composed of the urethane prepolymer (x) and at least one alcohol (B) selected from alcohols having from 1 to 7 carbon atoms to allow the mixture to react, thereby synthesizing a polyurethane resin (A) having a hydrolyzable silyl group in a molecular end or side chain thereof.

The invention is concerned with a polyurethane porous body, which is obtained by performing film deposition using an alcohol-soluble urethane resin composition obtained by the foregoing production process.

The invention is concerned with a moisture-permeable film, which is obtained by, as a first step, allowing a polyisocyanate (v) and a compound (w1) having a polyethylene glycol skeleton or the compound (w1) and at least one compound (w2) having an active hydrogen-containing group selected from polyether polyols, polyester polyols and polycarbonate polyols to react in the absence of a solvent, thereby synthesizing a urethane prepolymer (x') having an isocyanate group in a molecular end thereof; and, as a second step to be subsequently performed, carrying out any one method selected from the following methods:

(Method 1) a method of performing film deposition using an alcohol-soluble urethane resin composition for moisture-permeable film obtained by a production process of adding the urethane prepolymer (x') to a mixture composed of a diamine (y), at least one silane coupling agent (z) selected from a monoamine silane coupling agent, a diamine silane coupling agent and a monoisocyanate silane coupling agent and at least one alcohol (B) selected from alcohols having from 1 to 7 carbon atoms to allow the mixture to react, thereby synthesizing a polyurethane resin (A') having a hydrolyzable silyl group in a molecular end or side chain thereof,

(Method 2) a method of performing film deposition using an alcohol-soluble urethane resin composition for moisture-permeable film obtained by a production process of adding the urethane prepolymer (x') to a mixture composed of a diamine (y) and at least one silane coupling agent (z) selected from a monoamine silane coupling agent, a diamine silane coupling agent and a monoisocyanate silane coupling agent to allow the mixture to react, thereby synthesizing a polyurethane resin (A') having a hydrolyzable silyl group in a molecular end or side chain thereof and then dissolving the polyurethane resin (A') in at least one alcohol (B) selected from alcohols having from 1 to 7 carbon atoms, and

(Method 3) a method of performing film deposition using an alcohol-soluble urethane resin composition for moisture-permeable film obtained by a production process of adding a diamine (y) and at least one silane coupling agent (z) selected from a monoamine silane coupling agent, a diamine silane coupling agent and a monoisocyanate silane coupling agent to a mixture composed of the urethane prepolymer (x') and at least one alcohol (B) selected from alcohols having from 1 to 7 carbon atoms to allow the mixture to react, thereby synthesizing a polyurethane resin (A') having a hydrolyzable silyl group in a molecular end or side chain thereof.

## ADVANTAGES OF THE INVENTION

The invention is concerned with a process for producing an alcohol-soluble urethane resin composition which is excellent in storage stability in an alcohol during custody but which by adding water and a catalyst (for example, acid catalysts such as phosphoric acid and the like) to the system during use, coating the mixture and drying the coating at ordinary temperature or by heating to allow a crosslinking reaction to proceed, thereby forming a film, is capable of revealing excellent characteristics such as solvent resistance (for example, alcohol resistance), chemical resistance (for example, DMF resistance), heat resistance, elongation and the like. An alcohol-soluble urethane resin composition obtained by the production process is useful for various applications, for example, polyurethane porous bodies, moisture-permeable films, surface treating agents for synthetic leather, wet synthetic leather porous layers, impregnation layers, synthetic leather surface layers, adhesive layers and the like.

## BEST MODES FOR CARRYING OUT THE INVENTION

First of all, the alcohol-soluble urethane resin composition obtained by the process for producing an alcohol-soluble urethane resin composition and the polyurethane porous body using the same according to the invention are described.

The alcohol-soluble urethane resin composition is composed of, as essential components, at least a polyurethane resin (A) having a hydrolyzable silyl group in a molecular end or side chain thereof [hereinafter also referred to as "polyurethane resin (A)"] and at least one alcohol (B) selected from alcohols having from 1 to 7 carbon atoms [hereinafter also referred to as "alcohol (B)"].

The production process of an alcohol-soluble urethane resin composition is constituted of a first step of synthesizing a urethane prepolymer (x) and a second step to be subsequently performed of synthesizing the polyurethane resin (A) using the urethane prepolymer (x) to form an alcohol (B) solution.

That is, in the first step, the urethane prepolymer (x) is synthesized in the absence of a solvent; and in the second step to be subsequently performed, any one method selected from the following methods is carried out to obtain an alcohol-soluble urethane resin composition.

(Method 1) A method of adding the urethane prepolymer (x) to a mixture composed of a diamine (y), a specified silane coupling agent (z) and an alcohol (B) having a specified carbon atom number range to allow the mixture to react, thereby synthesizing a polyurethane resin (A) having a hydrolyzable silyl group in a molecular end or side chain thereof.

(Method 2) A method of adding the urethane prepolymer (x) to a mixture composed of a diamine (y) and a specified silane coupling agent (z) to allow the mixture to react, thereby synthesizing a polyurethane resin (A) having a hydrolyzable silyl group in a molecular end or side chain thereof and then dissolving the polyurethane resin (A) in an alcohol (B) having a specified carbon atom number range.

(Method 3) A method of adding a diamine (y) and a specified silane coupling agent (z) to a mixture composed of the urethane prepolymer (x) and an alcohol (B) having a specified carbon atom number range to allow the mixture to react, thereby synthesizing a polyurethane resin (A) having a hydrolyzable silyl group in a molecular end or side chain thereof.

In the first step, the polyisocyanate (v) and the at least one compound (w) having an active hydrogen-containing group selected from polyether polyols, polyester polyols and polycarbonate polyols are allowed to react in the absence of a solvent, thereby synthesizing the urethane prepolymer (x) having an isocyanate group in a molecular end thereof.

In order that the urethane prepolymer (x) may have an isocyanate group in a molecular end thereof, it is necessary to perform the reaction under a condition in which an isocyanate group equivalent of the polyisocyanate (v) used for the synthesis of the urethane prepolymer (x) is in excess relative to an active hydrogen-containing group equivalent of the compound (w) having an active hydrogen-containing group which is reactive with the isocyanate group (namely, a condition in which an (isocyanate group equivalent)/(active hydrogen-containing group equivalent) ratio exceeds 1), and the (isocyanate group equivalent)/(active hydrogen-containing group equivalent) ratio is preferably in the range of from 1.2 to 10.0, and more preferably in the range of from 1.5 to 5.0. In the synthesis of the urethane prepolymer (x), so far as the (isocyanate group equivalent)/(active hydrogen-containing group equivalent) ratio falls within such a range, not only a remarkable increase in viscosity to be caused due to the reaction between the active hydrogen-containing group and the isocyanate group can be suppressed, but the amount of a carbon dioxide gas generated at the time of a reaction between the isocyanate group and humidity (moisture) can be suppressed, and therefore, an excellent adhesive strength can be obtained. In this respect, in the invention, though "g/eq" is used as a unit of the equivalent, description of the unit is omitted.

A reaction condition at the time of allowing the polyisocyanate (v) and the compound (w) having an active hydrogen-containing group to react in the absence of a solvent is not particularly limited so far as the reaction is carried out by properly regulating and controlling, for example, a reaction temperature, a charge amount, a dropping rate, a rate of stirring and the like taking into consideration safety while thoroughly paying attention to abrupt heat generation or foaming, etc.

Examples of the polyisocyanate (v) include aromatic diisocyanates such as diphenylmethane diisocyanate (abbreviation: MDI; inclusive of its 4,4'-isomer, 2,4'-isomer and 2,2'-isomer and a mixture thereof), polymethylene polyphenyl polyisocyanate, carbodiimidated diphenylmethane polyisocyanate, tolylene diisocyanate (TDI; inclusive of its 2,4-isomer and 2,6-isomer and a mixture thereof), xylylene diisocyanate (XDI), 1,5-naphthalene diisocyanate (NDI), tetramethylxylene diisocyanate, etc.; alicyclic diisocyanates such as isophorone diisocyanate (IPDI), hydrogenated diphenylmethane diisocyanate (hydrogenated MDI), hydrogenated xylylene diisocyanate (hydrogenated XDI), etc.; and aliphatic diisocyanates such as hexamethylene diisocyanate, dimeric acid diisocyanate, norbornene diisocyanate, etc.. Of those compounds, from reasons such as good solubility in the alcohol (B) having from 1 to 7 carbon atoms, low reactivity with the alcohol (B) (namely, an unnecessary side reaction with the alcohol (B) is hardly caused), alicyclic isocyanates are preferable, and isophorone diisocyanate (IPDI) having an asymmetric structure is especially preferable. Those compounds may be used singly or in combinations of two or more kinds thereof.

The compound (w) having an active hydrogen-containing group is a polyol such as a polyether polyol, a polyester polyol, a polycarbonate polyol, with a polyester polyol and a polycarbonate polyol being preferable.

In the compounds (w) having an active hydrogen-containing group, examples of the polyether polyol include compounds obtained by a reaction between a reaction initiator having two or more active hydrogen-containing groups in a molecule thereof and an alkylene oxide.

Example of the reaction initiator include water, ethylene glycol, propylene glycol, butanediol, glycerin, trimethylolpropane, hexanetriol, triethanolamine, diglycerin, pentaerythritol, methyl glucoside, sorbitol, sucrose, aliphatic amine based compounds, aromatic amine based compounds, sucrose amine based compounds, phosphoric acid, and acidic phosphoric acid esters. Those compounds may be used singly or in combinations of two or more kinds thereof.

Examples of the alkylene oxide include cyclic ether compounds such as ethylene oxide (EO), propylene oxide (PO), and tetrahydrofuran (THF). Those compounds may be used singly or in combinations of two or more kinds thereof.

Also, examples of other polyether polyols which can be used include polymer polyols, PHD (polyharnsstoff) polyether polyols, urethane-modified polyether polyols and polyether ester copolymer polyols, all of which are a modified material of a polyether polyol.

In this respect, the polymer polyol refers to a polyether polyol obtained by graft polymerizing a vinyl group-containing monomer such as acrylonitrile (AN), a styrene monomer (SM) in a polyol.

Also, the PHD polyether polyol refers to a polyol obtained by allowing a diamine and a diisocyanate to react in a polyether and stably dispersing a formed polyurea.

The polyether polyol may be used singly or in combinations of two or more kinds thereof.

Also, examples of the polyester polyol include various polyester polyols of, for example, a polycondensation system, and a ring-opening polymerization system.

Examples of the polyester polyol of a polycondensation system include polyester polyols obtained by, for example, a condensation reaction between a polyhydric alcohol and a polybasic acid.

Examples of the polyhydric alcohol include ethylene glycol, 1,2-propanediol, 1,3-butanediol, 1,4-butanediol, 3-methyl-1,5-pentanediol, 1,6-hexanediol, 3,3'-dimethylolheptane, 1,4-cyclohexanedimethanol, neopentyl glycol, 3,3-bis(hydroxymethyl)heptane, diethylene glycol, dipropylene glycol, glycerin, and trimethylolpropane. Those compounds may be used singly or in combinations of two or more kinds thereof.

Also, examples of the polybasic acid include aliphatic polybasic acids such as succinic acid, adipic acid, azelaic acid, sebacic acid, and dodecanedicarboxylic acid; alicyclic polybasic acids such as cyclopentanedicarboxylic acid, and cyclohexanedicarboxylic acid; aromatic polybasic acids such as orthophthalic acid, isophthalic acid, terephthalic acid, and naphthalenedicarboxylic acid. Those compounds may be used singly or in combinations of two or more kinds thereof.

Examples of the polyester polyol of a ring-opening polymerization system include polycaprolactone polyols obtained by ring-opening polymerization of a cyclic ester compound such as $\varepsilon$-caprolactone, and $\gamma$-butyrolactone and the like (namely, a lactone).

The polyester polyol may be used singly or in combinations of two or more kinds thereof.

Also, examples of the polycarbonate polyol include polycarbonate polyols obtained by phosgeoation of a polyol, and an ion exchange method with diphenyl carbonate.

The polycarbonate based polyol may be used singly or in combinations of two or more kinds thereof.

Also, as to the compound (w) having an active hydrogen-containing group, in addition to the at least one member selected from polyether polyols, polyester polyols and polycarbonate polyols, which is essential for use, a compound having an active hydrogen-containing group having reactivity with an isocyanate group within the molecule can be used jointly as the need arises.

Examples of the compound having an active hydrogen-containing group having reactivity with an isocyanate group within the molecule, which can be used jointly with the compound (w) having an active hydrogen-containing group include a chain extender, and a polyol whose main chain is composed of a carbon-carbon bond.

Examples of the chain extender include polyhydric alcohols such as ethylene glycol, 1,2-propanediol, 1,3-butanediol, 1,4-butanediol, 2,3-butanediol, 3-methyl-1,5-pentanediol, 1,6-hexanediol, 3,3'-dimethylolheptane, 1,4-cyclohexanedimethanol, neopentyl glycol, 3,3-bis(hydroxymethyl)heptane, diethylene glycol, dipropylene glycol, polyethylene glycol, polypropylene glycol, polybutylene glycol, glycerin, trimethylolpropane, sorbitol, and hydroquinone diethylol ether; amine compounds; alkanolamines. Such a chain extender may be used singly or in combinations of two or more kinds thereof.

Examples of the polyol whose main chain is composed of a carbon-carbon bond include acrylic polyols obtained by introducing a hydroxyl group into an acrylic copolymer, polybutadiene polyols which are a copolymer of butadiene containing a hydroxyl group within a molecule thereof, hydrogenated polybutadiene polyols and partial saponification products of an ethylene-vinyl acetate copolymer (also referred to as "partially saponified EVA"). The kind, use amount and the like of the polyol whose main chain is composed of a carbon-carbon bond are not particularly limited so far as they fall within the range where the purpose of the invention is not impaired.

In the invention, subsequent to the first step of synthesizing the urethane prepolymer (x), the second step is carried out. The second step includes three kinds of methods of (Method 1) to (Method 3), and any one appropriate method may be carried out.

(Method 1) of the second step is a method of adding a urethane prepolymer (x) to a mixture composed of a diamine (y), at least one silane coupling agent (z) selected from a monoamine silane coupling agent, a diamine silane coupling agent and a monoisocyanate silane coupling agent and at least one alcohol (B) selected from alcohols having from 1 to 7 carbon atoms to allow the mixture to react, thereby synthesizing a polyurethane resin (A) having a hydrolyzable silyl group in a molecular end or side chain thereof.

In (Method 1) of the second step, examples of the process for producing a polyurethane resin (A) include a method in which a polyisocyanate (v) and a compound (w) having an active hydrogen-containing group are allowed to react in an (isocyanate group equivalent)/(active hydrogen-containing group equivalent) ratio preferably in the range of from 1.2 to 10.0, and more preferably in the range of from 1.5 to 5.0 in the absence of a solvent under a temperature condition of preferably from 60 to 120°C, and more preferably from 80 to 100°C, thereby synthesizing a urethane prepolymer (x), and subsequently, in the second step, the urethane prepolymer (x) is added to an alcohol (B) solution having prescribed amounts of a diamine (y) and a silane coupling agent (z) dissolved therein to allow the mixture to react at from 10 to 50°C.

Also, (Method 2) of the second step is a method of adding the urethane prepolymer (x) to a mixture composed of a diamine (y) and at least one silane coupling agent (z) selected from a monoamine silane coupling agent, a diamine silane coupling agent and a monoisocyanate silane coupling agent to allow the mixture to react, thereby synthesizing a polyurethane resin (A) having a hydrolyzable silyl group in a molecular end or side chain thereof and then dissolving the polyurethane resin (A) in at least one alcohol (B) selected from alcohols having from 1 to 7 carbon atoms.

In (Method 2) of the second step, examples of the process for producing a polyurethane resin (A) include a method in which a polyisocyanate (v) and a compound (w) having an active hydrogen-containing group are allowed to react in an (isocyanate group equivalent)/(active hydrogen-containing group equivalent) ratio preferably in the range of from 1.2 to 10.0, and more preferably in the range of from 1.5 to 5.0 in the absence of a solvent under a temperature condition of preferably from 60 to 120°C, and more preferably from 80 to 100°C, thereby synthesizing a urethane prepolymer (x), and subsequently, in the second step, prescribed amounts of a diamine (y) and a silane coupling agent (z) are added to the urethane polymer (x) to allow the mixture to react at from 10 to 50°C, thereby synthesizing a polyurethane resin (A), followed by adding an alcohol (B) to form a solution.

(Method 3) of the second step is a method of, subsequent to the first step, adding a diamine (y) and at least one silane coupling agent (z) selected from a monoamine silane coupling agent, a diamine silane coupling agent and a monoisocyanate silane coupling agent to a mixture composed of the urethane prepolymer (x) and at least one alcohol (B) selected from alcohols having from 1 to 7 carbon atoms to allow the mixture to react, thereby synthesizing a polyurethane resin (A) having a hydrolyzable silyl group in a molecular end or side chain thereof.

In (Method 3) of the second step, examples of the process for producing a polyurethane resin (A) include a method in which in the first step, a polyisocyanate (v) and a polyether polyol which is a compound (w) having an active hydrogen-containing group are allowed to react in an (isocyanate group equivalent)/(active hydrogen-containing group equivalent) ratio preferably in the range of from 1.2 to 10.0, and more preferably in the range of from 1.5 to 5.0 in the absence of a solvent under a temperature condition of preferably from 60 to 120°C, and more preferably from 80 to 100°C, thereby synthesizing a urethane prepolymer (x), and in a second step to be subsequently performed, prescribed amounts of a diamine (y) and a silane coupling agent (z) are dissolved in or mixed with a mixture composed of the urethane prepolymer (x) and at least one alcohol (B) selected from alcohols having from 1 to 7 carbon atoms to allow the mixture to react at from 10 to 50°C, thereby synthesizing a polyurethane resin (A).

Examples of the diamine (y) include isophoronediamine (IPDA), 4,4'-diphenylmethanediamine, diaminoethane, 1,2- or 1,3-diaminopropane, 1,2-, 1,3- or 1,4-diaminobutane, 1,5-diaminopentane, 1,6-diaminohexane, piperazine, N, N'-bis-(2-aminoethyl)piperazine, bis-(4-aminocyclohexyl)methane, bis-(4-amino-3-butylcyclohexyl)methane, 1,2-, 1,3- or 1,4-diaminocyclohexane, norbornene diamine, hydrazine, and adipic acid dihydrazine. Of those compounds, because of excellent solubility in the alcohol (B), isophoronediamine (IPDA) having an asymmetric structure is preferable. Those compounds may be used singly or in combinations of two or more kinds thereof.

A use amount of the diamine (y) is preferably in an equivalent ratio in the range of from 0.80 to 1.00, and more preferably in an equivalent ratio in the range of from 0.90 to 1.00 relative to 1.00 equivalent of NCO of the urethane prepolymer (x). So far as the use amount of the diamine (y) falls within such a range, a film having excellent solvent resistance (for example, alcohol resistance), chemical resistance (for example, DMF resistance), heat resistance and strength can be obtained.

In the invention, the reaction is performed by essentially using the specified silane coupling agent (z). The silane coupling agent is at least one member selected from a monoamine silane coupling agent (z-1), a diamine silane coupling agent (z-2) and a monoisocyanate silane coupling agent (z-3).

Examples of the monoamine silane coupling agent (z-1) include monoamine silane coupling agents such as γ-aminopropyltriethoxysilane, γ-aminopropyltrimethoxysilane, γ-aminopropylmethyldimethoxysilane, and γ-aminopropylmethyldiethoxysilane. Those compounds may be used singly or in combinations of two or more kinds thereof.

Examples of the diamine silane coupling agent (z-2) include diamine silane coupling agents such as N-β-(ami-noethyl)-γ-aminopropyltrimethoxysilane, and N-β-(aminoethyl)-γ-aminopropymetnyldimethoxysilane. Those compounds may be used singly or in combinations of two or more kinds thereof.

Examples of the monoisocyanate silane coupling agent (z-3) include monoisocyanate silane coupling agents such as γ-isocyanatopropyltriethoxysilane and γ-isocyanatopropyltrimethoxysilane. Those compounds may be used singly or in combinations of two or more kinds thereof.

Of the foregoing silane coupling agents (z), in view of the facts that a compounded liquid is excellent in a pot life (namely, storage stability) and that a crosslinked film is excellent in solvent resistance (for example, alcohol resistance) and chemical resistance (for example, DMF resistance), γ-aminopropyltriethoxysilane and γ-isocyanatopropyltriethoxysilane are preferable.

A use amount of the silane coupling agent (z) is preferably in an equivalent ratio in the range of from 0.001 to 0.3, and more preferably in an equivalent ratio in the range of from 0.03 to 0.1 relative to 1.00 equivalent of NCO of the urethane prepolymer (x). So far as the use amount of the silane coupling agent (z) falls within such a range, excellent characteristics in solvent resistance (for example, alcohol resistance), chemical resistance (for example, DMF resistance), heat resistance, elongation and the like can be obtained.

In the invention, since the polyurethane resin (A) has good solubility in the alcohol (B) having from 1 to 7 carbon atoms, the alcohol-soluble urethane resin composition of the invention can be easily prepared.

Since the alcohol (B) effectively acts as an excellent solvent or dispersion medium against the polyurethane resin (A), for example, a polyurethane porous body can be obtained by preparing the alcohol-soluble urethane resin composition of the invention and performing film deposition using the same.

The alcohol (B) may have any structure of a linear, branched or cyclic structure having from 1 to 7 carbon atoms. Of those alcohols, because of excellent solubility in water, alcohols having from 1 to 4 carbon atoms, such as methyl alcohol, ethyl alcohol, n-propyl alcohol, isopropyl alcohol, n-butyl alcohol, isobutyl alcohol, and t-butyl alcohol, are preferable, with methyl alcohol, ethyl alcohol, n-propyl alcohol and isopropyl alcohol being more preferable. Those alcohols may be used singly or in combinations of two or more kinds thereof. The alcohol (B) may be used singly or in combinations of two or more kinds thereof.

In the case where the alcohol-soluble urethane resin composition of the invention is used especially for a wet processing method, it is preferable to select, as the alcohol (B), an alcohol having an infinite solubility in water. Examples of such an alcohol include methyl alcohol, ethyl alcohol, n-propyl alcohol, and isopropyl alcohol. Those alcohols may be used singly or in combinations of two or more kinds thereof.

Since the alcohol (B) is a weak solvent different from a strong solvent such as DMF and the like, for example, even in the case where the urethane resin composition is coated on a urethane resin-made wet porous layer or dry porous layer or film, there is no concern that such a porous layer or film is dissolved or broken. Thus, such a urethane resin composition is useful for various applications, for example, polyurethane porous bodies, moisture-permeable films, surface treating agents, surface treating agents for synthetic leather, wet synthetic leather porous layers, impregnation layers, synthetic leather surface layers, adhesive layers and the like.

A use proportion between the polyurethane resin (A) and the alcohol (B) is preferably from 20 to 70 % by mass for the polyurethane resin (A) and from 80 to 30 % by mass for the alcohol (B), and more preferably from 20 to 60 % by mass for the polyurethane resin (A) and from 80 to 40 % by mass for the alcohol (B) relative to a total mass [A + B] of the polyurethane resin (A) and the alcohol (B). So far as the use proportion between the polyurethane resin (A) and the alcohol (B) falls within such a range, excellent characteristics in storage stability, heat resistance, solvent resistance (for example, alcohol resistance), chemical resistance (for example, DMF resistance), elongation and the like are revealed.

In the alcohol-soluble urethane resin composition of the invention, for example, a film deposition aid, a filler, a thixotropy imparting agent, a tackifier, a surfactant, a pigment, a resin for blending, and other additives can be added as the need arises within the range where the purpose of the invention is not impaired.

Though the film deposition aid is not particularly limited, examples thereof include anionic surfactants (for example, dioctyl sulfonic acid ester sodium salt, etc.), hydrophobic nonionic surfactants (for example, sorbitan monooleate, etc.), siticone oil, and water.

Though the filler is not particularly limited, examples thereof include carbonic acid salts (for example, a calcium salt, a calcium/magnesium salt, a magnesium salt, etc.), silicic acid, silicic acid salts (for example, an aluminum salt, a magnesium salt, a calcium salt, etc.), hydroxides (for example, an aluminum salt, a magnesium salt, a calcium salt, etc.), sulfuric acid salts (for example, a barium salt, a calcium salt, a magnesium salt, etc.), boric acid salts (for example, an aluminum salt, a zinc salt, a calcium salt, etc.), titanic acid salts (for example, a potassium salt, etc.), metal oxides (for example, zinc, titanium, magnesium, calcium, aluminum, etc.), carbon materials, and organic materials.

Though the thixotropy imparting agent is not particularly limited, examples thereof include fatty acids, fatty acid metal salts, fatty acid esters, paraffins, resin acids, surfactants, the foregoing fillers having been surface treated with a polyacrylic acid or the like, a polyvinyl chloride powder, hydrogenated castor oil, finely powdered silica, organic bentonite, and zeolite.

Though the tackifier is not particularly limited, examples thereof include tackifiers such as rosin resin based, terpene resin based or phenol resin based tackifiers.

Furthermore, examples of other additives include various additives such as a reaction accelerator (for example, metal based, metal salt based or amine based reaction accelerators, etc.), a stabilizer (for example, ultraviolet ray absorbers, antioxidants, heat-resistant stabilizers, etc.), a moisture removing agent (for example, 4-p-toluenesulfonyl isocyanate, etc.), an adsorbing agent (for example, calcium oxide, calcium hydroxide, zeolite, molecular sieve, etc.), an adhesiveness imparting agent (for example, coupling agents, organic metal based coupling agents, etc.), an antifoaming agent, and a leveling agent.

Next, the polyurethane porous body of the invention is described.

The polyurethane porous body of the invention can be obtained by adding the foregoing additive such as a film deposition aid to the alcohol-soluble urethane resin composition as the need arises and performing film deposition by a known method.

In general, from reasons that (1) the solubility of the polyurethane resin in the urethane resin composition is lowered with an increase of the carbon atom number of the alcohol; (2) the boiling point rises with an increase of the carbon atom number of the alcohol so that drying properties are lowered, thereby making dry processing difficult from the standpoint of practical use; for the purpose of avoiding those impairments, in the invention, it is essential to use only an alcohol having from 1 to 7 carbon atoms which has an infinite or extremely large solubility in water and which makes it possible to form a porous structure with ease by displacement of the alcohol with water at the time of film deposition.

In the polyurethane porous body, though the carbon atom number of the alcohol (B) constituting the alcohol-soluble urethane resin composition is in the range of from 1 to 7, in particular, in the case where the carbon atom number is in the range of from 1 to 4, the solubility of the alcohol in water becomes infinite. Thus, such case is especially useful because the film deposition by the same wet film deposition mode as in a urethane resin composition of a DMF single solvent system which has been conventionally used can be favorably performed.

The polyurethane porous body is obtained using the alcohol-soluble urethane resin composition, and the polyurethane resin (A) which is a constituent component thereof is composed of, as the compound (w) having an active hydrogen-containing group, at least one member selected from polyether polyols, polyester polyols and polycarbonate polyols. Of those polyols, polyester polyols and polycarbonate polyols are preferable because they have high cohesion and are excellent in wet film deposition properties.

Though a process for producing the polyurethane porous body is not particularly limited, examples thereof include a method in which a compounded liquid prepared by adding appropriate amounts of water and a catalyst such as phosphoric acid and the like to the alcohol-soluble urethane resin composition is coated in an appropriate thickness on a porous moisture-permeable waterproof processed fabric composed of a urethane resin for dry porous layer using a floating knife or the like, the coated processed fabric is dried at ordinary temperature or by heating in a dryer to allow a crosslinking reaction to proceed, thereby forming a film, and the film is topcoated; and a method in which a compounded liquid is coated in an appropriate thickness using a floating knife or the like, coagulated in water, cleaned and then dried to form a porous structure.

According to the polyurethane porous body of the invention, first when film deposition is performed using the alcohol-soluble urethane resin composition composed of a combination of "a polyurethane resin having a hydrolyzable silyl group in a molecular end or side chain thereof" and "only an alcohol having from 1 to 7 carbon atoms as a solvent", not only excellent characteristics which have been unable to be achieved by conventional technologies, such as solvent resistance (for example, alcohol resistance), chemical resistance (for example, DMF resistance), heat resistance, elongation and the like, can be revealed, but in view of the fact that an alcohol having from 1 to 7 carbon atoms which is a weak solvent is used in place of a strong solvent, for example, DMF, etc., environmental countermeasures due to an enhancement of original processing properties of topcoating on a urethane porous layer, etc., or solvent recycling properties and the like can be realized.

Since the polyurethane porous body is excellent in performances such as moisture permeation properties, breathability, volume feeling, touch feeling and the like, it is useful for various applications, for example, shoes, bags, chairs, furniture, bedclothes, vehicle interiors, clothes, cushioning materials and the like.

Next, a process for producing an alcohol-soluble urethane resin composition for moisture-permeable film which is used for obtaining the moisture-permeable film of the invention is described.

Likewise the foregoing, the process for producing an alcohol-soluble urethane resin composition for moisture-permeable film includes a first step and a second step to be subsequently performed.

The alcohol-soluble urethane resin composition for moisture-permeable film which is used in the invention can be obtained by, as a first step, allowing a compound (w1) having a polyethylene glycol skeleton as or the compound (w1) and a specified compound (w2) having an active hydrogen-containing group as essential components to react in the absence of a solvent, thereby synthesizing a urethane prepolymer (x') having an isocyanate group in a molecular end thereof; and, as a second step to be subsequently performed, carrying out any one method selected from the following methods:

(Method 1) a method of adding the urethane prepolymer (x') to a mixture composed of a diamine (y), a specified silane coupling agent (z) and an alcohol (B) having a specified carbon atom number range to allow the mixture to react, thereby synthesizing a polyurethane resin (A') having a hydrolyzable silyl group in a molecular end or side chain thereof,

(Method 2) a method of adding the urethane prepolymer (x') to a mixture composed of a diamine (y) and a specified silane coupling agent (z) to allow the mixture to react, thereby synthesizing a polyurethane resin (A') having a hydrolyzable silyl group in a molecular end or side chain thereof and then dissolving the polyurethane resin (A') in an alcohol (B) having a specified carbon atom range, and

(Method 3) a method of adding a diamine (y) and a specified silane coupling agent (z) to a mixture composed of the urethane prepolymer (x') and an alcohol (B) having a specified carbon atom range to allow the mixture to react, thereby synthesizing a polyurethane resin (A') having a hydrolyzable silyl group in a molecular end or side chain thereof.

That is, in the first step, a polyisocyanate (v) and a compound (w1) having a polyethylene glycol skeleton or the compound (w1) and at least one compound (w2) having an active hydrogen-containing group selected from polyether polyols, polyester polyols and polycarbonate polyols are allowed to react in the absence of a solvent, thereby synthesizing a urethane prepolymer (x') having an isocyanate group in a molecular end thereof.

In order that the urethane prepolymer (x') may have an isocyanate group in a molecular end thereof, it is necessary to perform the reaction under a condition in which an isocyanate group equivalent (hereinafter referred to as "NCO equivalent") of the polyisocyanate (v) used for the synthesis of the urethane prepolymer (x') is in excess relative to a total equivalent of an active hydrogen-containing group equivalent of the compound (w1) having a polyethylene glycol skeleton which is reactive with the isocyanate group and the compound (w2) having an active hydrogen-containing group [hereinafter referred to as "total equivalent of (w1) and (w2)"] [namely, a condition in which an (NCO equivalent)/[total equivalent of (w1) and (w2)] ratio exceeds 1], and the (NCO equivalent)/[total equivalent of (w1) and (w2)] ratio is preferably in the range of from 1.2 to 10.0, and more preferably in the range of from 1.5 to 5.0. In the synthesis of the urethane prepolymer (x'), so far as the (NCO equivalent)/[total equivalent of (w1) and (w2)] ratio falls within such a range, not only a remarkable increase in viscosity to be caused due to the reaction between the active hydrogen-containing group and the isocyanate group can be suppressed, but the amount of a carbon dioxide gas generated at the time of a reaction between the isocyanate group and humidity (moisture) can be suppressed, and therefore, an excellent adhesive strength can be obtained. In this respect, in the invention, though "g/eq" is used as a unit of the equivalent, description of the unit is omitted.

A reaction condition at the time of allowing the polyisocyanate (v) and the compound (w1) having a polyethylene glycol skeleton or the compound (w1) and the compound (w2) having an active hydrogen-containing group to react in the absence of a solvent is not particularly limited so far as the reaction is carried out by properly regulating and controlling, for example, a reaction temperature, a charge amount, a dropping rate, a rate of stirring and the like taking into consideration safety while thoroughly paying attention to abrupt heat generation or foaming, etc.

As the polyisocyanate (v), compounds the same as those described previously can be used. Of those compounds, from reasons such as good solubility in the alcohol (B) having from 1 to 7 carbon atoms, low reactivity with the alcohol (namely, an unnecessary reaction with the alcohol is hardly caused) and the like, alicyclic isocyanates are preferable, and isophorone diisocyanate (IPDI) having an asymmetric structure is especially preferable. Those compounds may be used singly or in combinations of two or more kinds thereof.

Examples of the compound (w1) having a polyethylene glycol skeleton include polyoxyethylene glycol.

A number average molecular weight (hereinafter also referred to as "Mn") of the compound (w1) is preferably in the range of from 500 to 3,000, and more preferably in the range of from 1,000 to 2,000. So far as Mn of the compound (w1) falls within such a range, when used for, for example, moisture-permeable films, a good balance between moisture permeability and water swelling can be obtained.

Examples of the compound (w2) having an active hydrogen-containing group include polyols such as polyether polyols, polyester polyols, and polycarbonate polyols. Of those polyols, polyester polyols and polycarbonate polyols are preferable because they have high cohesion and are excellent in wet film deposition properties. Those polyols may be used singly or in combinations of two or more kinds thereof.

As the compound (w2) having an active hydrogen-containing group, compounds the same as those in the compound (w) having an active hydrogen-containing group can be used.

In the first step, the polyisocyanate (v) and the compound (w1) having a polyethylene glycol skeleton singly or a combination of the compound (w1) having a polyethylene glycol skeleton and the compound (w2) having an active hydrogen-containing group are allowed to react in the absence of a solvent.

A use ratio (mass ratio) in the case of joint use of the compound (w1) having a polyethylene glycol skeleton and the compound (w2) having an active hydrogen-containing group is preferably in the range of from 0.1/1 to 0.9/1, and more preferably in the range of from 0.4/1 to 0.8/1 in terms of (w1)/(w1 + w2). So far as the use ratio (mass ratio) of the compound (w1) and the compound (w2), when used for moisture-permeable films, a good balance between moisture permeability and water swelling can be obtained.

Furthermore, a compound (w3) having an active hydrogen-containing group having reactivity with an isocyanate group within a molecule thereof can be used jointly with the compound (w1) having a polyethylene glycol skeleton or the compound (w1) and the compound (w2) having an active hydrogen-containing group as the need arises.

Examples of the compound (w3) having an active hydrogen-containing group having reactivity with an isocyanate group within a molecule thereof include a chain extender, and a polyol whose main chain is composed of a carbon-carbon bond, but is should not be construed that the compound (w3) is limited thereto. As the compound (w3), compounds the same as those described previously can be used.

In the invention, in order to obtain the alcohol-soluble urethane resin composition for moisture-permeable film, subsequent to the first step of synthesizing the urethane prepolymer (x'), the second step is carried out. The second step includes three kinds of methods of (Method 1) to (Method 3) the same as those described previously, and any one appropriate method may be carried out.

Specific examples of the first step and the second step (Method 1) to be subsequently performed include a method in which in the first step, the (NCO equivalent)/[total equivalent of (w1) and (w2)] ratio is set up preferably in the range of from 1.2 to 10.0, and more preferably in the range of from 1.5 to 5.0, and the polyisocyanate (v), polyoxyethylene glycol which is the compound (w1) and a polyether polyol which is the compound (w2) are allowed to react in the absence of a solvent under a temperature condition preferably in the range of from 60 to 120°C, and more preferably in the range of from 80 to 100°C, thereby synthesizing a urethane prepolymer (x'); and subsequently, in the second step, the urethane prepolymer (x') is added to a solution of an alcohol (B) having from 1 to 7 carbon atoms having prescribed amounts of a diamine (y) and a silane coupling agent (z) dissolved therein or mixed therewith to allow the mixture to react at from 10 to 50°C, thereby synthesizing a polyurethane resin (A'), from which is then obtained an alcohol-soluble urethane resin composition for moisture-permeable film.

Specific examples of the first step and the second step (Method 2) to be subsequently performed include a method in which in the first step, the (NCO equivalent)/[total equivalent of (w1) and (w2)] ratio is set up preferably in the range of from 1.2 to 10.0, and more preferably in the range of from 1.5 to 5.0, and the polyisocyanate (v), polyoxyethylene glycol which is the compound (w1) and a polyether polyol which is the compound (w2) are allowed to react in the absence of a solvent under a temperature condition preferably in the range of from 60 to 120°C, and more preferably in the range of from 80 to 100°C, thereby synthesizing a urethane prepolymer (x'); and subsequently, in the second step, the urethane prepolymer (x') is added to a mixture composed of prescribed amounts of a diamine (y) and a silane coupling agent (z), or prescribed amounts of a diamine (y) and a silane coupling agent (z) are added to the urethane prepolymer (x'), to allow the mixture to react at from 10 to 50°C, thereby synthesizing a polyurethane resin (A'), and thereafter, an alcohol (B) having from 1 to 7 carbon atoms is added to form a solution, from which is then obtained an alcohol-soluble urethane resin composition for moisture-permeable film).

Specific examples of the first step and the second step (Method 3) to be subsequently performed include a method in which in the first step, the (NCO equivalent)/[total equivalent of (w1) and (w2)] ratio is set up preferably in the range of from 1.2 to 10.0, and more preferably in the range of from 1.5 to 5.0, and the polyisocyanate (v), polyoxyethylene glycol which is the compound (w1) and a polyether polyol which is the compound (w2) are allowed to react in the absence of a solvent under a temperature condition preferably in the range of from 60 to 120°C, and more preferably in the range of from 80 to 100°C, thereby synthesizing a urethane prepolymer (x'); and subsequently, in the second step, prescribed amounts of a diamine (y) and a silane coupling agent (z) are dissolved in or mixed with a mixture composed of the urethane prepolymer (x') and an alcohol (B) having from 1 to 7 carbon atoms to allow the mixture to react at from 10 to 50°C, thereby synthesizing a polyurethane resin (A'), from which is then obtained an alcohol-soluble urethane resin composition for moisture-permeable film.

As the diamine (y), the foregoing compound can be used in the foregoing use amount range, and a film having excellent characteristics in solvent resistance, chemical resistance, heat resistance, strength, elongation and the like can be obtained.

Also, as the silane coupling agent (z), the foregoing monoamine silane coupling agent (z-1), diamine silane coupling agent (z-2) or monoisocyanate silane coupling agent (z-3) can be used in the foregoing use amount range, and a film having excellent characteristics in solvent resistance, chemical resistance, heat resistance, elongation and the like can be obtained.

As the alcohol (B), the foregoing alcohol having any structure of a linear, branched or cyclic structure in which an alkyl group thereof has from 1 to 7 carbon atoms can also be used.

A use proportion between the polyurethane resin (A') and the alcohol (B) is preferably from 20 to 70 % by mass for the polyurethane resin (A') and from 80 to 30 % by mass for the alcohol (B), and more preferably from 20 to 60 % by mass for the polyurethane resin (A') and from 80 to 40 % by mass for the alcohol (B) relative to a total mass [A' + B] of the polyurethane resin (A') and the alcohol (B). So far as the use proportion between the polyurethane resin (A') and the alcohol (B) falls within such a range, excellent characteristics in storage stability, heat resistance, solvent resistance (for example, alcohol resistance), chemical resistance (for example, DMF resistance), elongation and the like are revealed.

In the alcohol-soluble urethane resin composition for moisture-permeable film of the invention, in addition to a film deposition aid, a filler, a thixotropy imparting agent and a tackifier as described previously, for example, a surfactant, a pigment, a resin for blending, and other additives can be added as the need arises within the range where the purpose of the invention is not impaired.

Next, the moisture-permeable film of the invention is hereunder described.

According to the alcohol-soluble urethane resin composition for moisture-permeable film which is used in the invention, it is possible to obtain a moisture-permeable film which is excellent in storage stability in the alcohol (B) having from 1 to 7 carbon atoms during custody but which, for example, by adding water and a catalyst (for example, acid catalysts such as phosphoric acid and the like, etc.) to the system during actual use, coating the mixture and drying the coating at ordinary temperature or by heating to allow a crosslinking reaction to proceed, thereby forming a film, is capable of revealing excellent characteristics such as solvent resistance (for example, alcohol resistance), chemical resistance (for example, DMF resistance), heat resistance, elongation and the like.

The moisture-permeable film of the invention can be obtained by adding the foregoing additive such as a film deposition aid and the like to the alcohol-soluble urethane resin composition for moisture-permeable film as the need arises and performing film deposition by a known method.

From reasons that (1) the solubility of the polyurethane resin in the urethane resin composition is lowered with an increase of the carbon atom number of the alcohol; (2) the boiling point rises with an increase of the carbon atom number of the alcohol so that drying properties are lowered, thereby making dry processing difficult from the standpoint of practical use; for the purpose of avoiding those impairments, in the invention, it is essential to use only an alcohol having from 1 to 7 carbon atoms which has an infinite or extremely large solubility in water and which makes it possible to form a porous structure with easy by displacement of the alcohol with water at the time of film deposition.

In the moisture-permeable film, though the carbon atom number of the alcohol (B) constituting the alcohol-soluble urethane resin composition is in the range of from 1 to 7, in particular, in the case where the carbon atom number is in the range of from 1 to 4, the solubility of the alcohol in water becomes infinite. Thus, such case is especially useful because the film deposition by the same wet film deposition mode as in a urethane resin composition of a DMF single solvent system which has been conventionally used can be favorably performed.

In this respect, the "porous layer" or "porous structure" as referred to in the invention is included in the film.

In the invention, the film deposition is performed by essentially using the polyurethane resin (A') and the alcohol (B) having from 1 to 7 carbon atoms. However, in the case where a strong solvent such as DMF and the like is used, there may be the case where though the film itself is not dissolved, only pores are broken so that the film becomes non-porous. Thus, the purpose of the invention cannot be achieved.

Examples of a process for producing the moisture-permeable film include a method in which a compounded liquid prepared by adding appropriate amounts of water and a catalyst such as phosphoric acid and the like to the alcohol-soluble urethane resin composition for moisture-permeable film is coated in an appropriate thickness on a porous moisture-permeable waterproof processed fabric composed of a urethane resin for dry porous layer using a floating knife or the like, the coated processed fabric is dried at ordinary temperature or by heating in a dryer at a temperature preferably in the range of from 40 to 150°C, and more preferably in the range of from 80 to 100°C to allow a crosslinking reaction to proceed, thereby forming a polyurethane film (film), and the film is topcoated.

In producing artificial leathers, synthetic leathers, polyurethane films, polyurethane porous bodies and the like, there have hitherto been used organic solvent based urethane resin compositions. On that occasion, in general, a strong solvent such as DMF, MEK, toluene and the like has been used as the organic solvent. However, in coating on a urethane porous layer or a urethane film, there may be the case where such a strong solvent dissolved or broke the urethane porous layer or urethane film.

In the polyurethane porous body and the moisture-permeable film of the invention, it is essential to use at least one alcohol (B) selected from alcohols having from 1 to 7 carbon atoms without using a strong solvent such as DMF and the like. Since the foregoing specified alcohol has an infinite or extremely large solubility in water, its solvent recovery and recycling are easy, and thus, it is very useful.

In the invention, first when film deposition is performed using the alcohol-soluble urethane resin composition for moisture-permeable film composed of a combination of "a polyurethane resin having a hydrolyzable silyl group in a molecular end or side chain thereof" and "only an alcohol having from 1 to 7 carbon atoms as a solvent" by a film deposition mode, for example, a wet film deposition mode, a dry film deposition mode, etc., there are brought advantages that not only excellent characteristics which have been unable to be achieved by conventional technologies, such as solvent resistance (for example, alcohol resistance), chemical resistance (for example, DMF resistance), heat resistance, elongation and the like, can be revealed, but in view of the fact that an alcohol having from 1 to 7 carbon atoms which is a weak solvent is used in place of a strong solvent such as DMF and the like, original processing properties of topcoating on a film (in particular, a urethane porous layer and the like), etc., or solvent recycling properties and the like can be realized.

Since the moisture-permeable film of the invention is excellent in performances such as moisture permeation properties, breathability, volume feeling, touch feeling and the like, it is useful for various applications, for example, shoes, bags, chairs, furniture, bedclothes, vehicle interiors, clothes, cushioning materials and the like.

EXAMPLES

The invention is more specifically described below by reference to the following Examples, but it should not be construed that the scope of the invention is limited to only the Examples. Measuring methods and evaluation methods used in the invention are as follows.

[Measuring method of number average molecular weight (Mn) of polyurethane resins (A) and (A')] Mn of each of polyurethane resins (A) and (A') is a value measured by a gel permeation chromatograph in terms of polystyrene under the following condition.

Resin sample solution: 0.4 % dimethylformamide (DMF) solution

Column: KD-806M (manufactured by Showa Denko K.K.)

Eluent: DMF

[Measuring method of solution viscosity of alcohol-soluble urethane resin composition] An alcohol-soluble urethane resin composition was charged in a glass bottle, this glass bottle was dipped in a constant-temperature water tank set up at a water temperature of 25°C, and a solution viscosity (mPa·s, measuring temperature: 25°C) was measured using a digital viscometer, DV-H (manufactured by TOKIMEC).

[Preparation method of porous body by wet coagulation method] 0.2 parts by mass of phosphoric acid was added to 100 parts by mass of an alcohol-soluble urethane resin composition; a mixed liquid was regulated so as to have a viscosity of about 3,000 mPa·s by further diluting with an alcohol as a solvent; and the compounded liquid was coated on a polyethylene terephthalate (PET) film, dipped for coagulation in water for 10 minutes, washed with warm water and then dried (temperature: 100°C x 10 minutes), thereby obtaining a porous film of polyurethane.

[Preparation method of polyurethane film] 0.5 parts by mass of water and 0.2 parts of phosphoric acid were added to 100 parts by mass of an alcohol-soluble urethane resin composition to prepare a compounded liquid; the compounded liquid was coated in a thickness of 200 μm on a release paper; and subsequently, the coated release paper was allowed to stand in a dryer at 100°C for 3 minutes and heated for drying, thereby obtaining a polyurethane film having a film thickness of 20 μm.

[Measuring method of flow starting temperature of film] Using the thus prepared polyurethane film, a flow starting temperature (°C) of the film was measured under the following condition, thereby evaluating heat resistance of the film. Evaluation was made such that the higher the flow starting temperature of the film, the more excellent the heat resistance is.

Measuring instrument: Shimadzu Flow Tester, SHIMADZU CFT-500D-1

Die: 1.0 mmφ x 1.0 mmi

Load: 98 N

Hold time: 10 minutes

Temperature rise rate: 3°C/min

[Measuring method of elongation of film] Using the thus prepared polyurethane film, an elongation of the film was measured under the following condition.

Measuring instrument: SHIMADZU AUTOGRAPH "AG-1"

Test rate: 300 mm/min

Between marked lines: 20 mm

Between clipped lines: 40 mm

[Evaluation method of solvent resistance (alcohol resistance) of film] The thus prepared polyurethane film was cut out into a size of 5 x 5 cm; its mass ($W_0$) was previously measured; after dipping in methanol for 24 hours under a room temperature condition, the film was filtered with a 300-mesh screen; a mass ($W_1$) of the film residue remaining on the screen was measured; and a mass ratio (%) to the mass of the film before dipping was calculated according to the following expression and evaluated as the solvent resistance (alcohol resistance) of the film.

$$\text{Solvent resistance (alcohol resistance) (\%) of film} = W_1/W_0 \times 100$$

$W_0$ : Mass of the film before dipping
$W_1$: Mass of the film residue after dipping in methanol for 24 hours under a room temperature condition

[Evaluation method of chemical resistance (DMF resistance) of film] The thus prepared polyurethane film was cut out into a size of 5 x 5 cm; its mass ($W_0$) was previously measured; after dipping in DMF for 24 hours under a room temperature condition, the film was filtered with a 300-mesh screen; a mass ($W_1$) of the film residue remaining on the screen was measured; and a mass ratio (%) to the mass of the film before dipping was calculated according to the following expression and evaluated as the chemical resistance (DMF resistance) of the film.

$$\text{Chemical resistance (DMF resistance) (\%) of film} = W_1/W_0 \times 100$$

$W_0$: Mass of the film before dipping

$W_1$: Mass of the film residue after dipping in DMF for 24 hours under a room temperature condition

[Evaluation method of pore-forming properties] A porous structure forming state of the thus prepared polyurethane film was observed by an electron microscope (SEM), and pore-forming properties of the pore structure were evaluated on five grades of from 1 to 5 according to the following criteria.

5: Pores are large and reach a lower part of the film from the surface.

4: Pores have a size of 70 % of the thickness from the surface.

3: Pores fall within the range of 25 % or more and less than 70 % of the thickness from the surface.

2: Pores fall within the range of 10 % or more and less than 25 % of the thickness from the surface.

1. No pore is formed at all, and the film is non-porous.

[Evaluation method of resistance to dissolution (cell shape retaining properties) of porous body] On a polyurethane porous body composed of XOLTEX PX-300 (manufactured by DIC Corporation) which is a urethane resin for dry porous layer, an alcohol solution of each polyurethane resin was coated (coating amount: 2 to 5 $g/m^2$) using a floating knife; after drying at 100°C for 3 minutes, a sectional structure was observed by an electron microscope (SEM); and retaining properties of the porous structure were evaluated on five grades of from 1 to 5 according to the following criteria.

5: The porous layer retained completely its shape.

4: Dissolution of the porous layer stopped to an extent of less than 10 % of the thickness from the surface.

3: Dissolution of the porous layer fell within the range of 10 % or more and less than 25 % of the thickness from the surface.

2: Dissolution of the porous layer fell within the range of 25 % or more and less than 70 % of the thickness from the surface.

1: Dissolution of the porous layer reached 70 % of the thickness from the surface, or the porous layer was completely dissolved.

[Measuring method of moisture permeability of film] The measurement was carried out according to the JIS-L1099 (A-1) method. The thus prepared polyurethane film was installed on a moisture permeation measuring cup (radius: 3 cm) in which calcium chloride was charged to a level of 3 mm beneath the film surface and placed in a thermo-hygrostat (internal temperature: 40 $\pm$ 2°C, relative humidity: 90 $\pm$ 5 %). A mass ($W_1$) one hour after placing and a mass ($W_2$) an additional one hour after further placing were measured, and a moisture permeability of the polyurethane film (film) was calculated according to the following expression. Determination was made such that the larger the moisture permeability value, the more excellent the moisture permeation properties of the polyurethane film (film) are.

$$\text{Moisture permeability} = (W_2 - W_1) \times 24 \div A$$

$W_1$: Mass one hour after placing

$W_2$: Mass an additional one hour after further $W_1$

A: Moisture permeation area [0.03 (m) x 0.03 (m) x 3.14 = 0.002826 ($m^2$)]

[Example 1] As the first step, a reactor equipped with a stirrer, a thermometer and a nitrogen gas inlet pipe was charged with 280 g of isophorone diisocyanate (IPDI) and 1,000 g of polyoxypropylene diol (molecular weight: 2,000), and the mixture was allowed to react with stirring at 100°C for 6 hours under a nitrogen gas stream in the absence of a solvent, thereby synthesizing a urethane prepolymer (x).

Subsequently, as the second step, 217 g of the foregoing urethane prepolymer (x) was added to a mixture consisting of 20 g of isophoronediamine, 1.57 g of γ-aminopropyltriethoxysilane and 557 g of isopropyl alcohol (IPA) as the alcohol (B) while stirring, and the mixture was allowed to react at 50°C for 3 hours, thereby obtaining an alcohol-soluble urethane resin composition containing a polyurethane resin (A) (Mn: 180,000) according to the invention.

The foregoing alcohol-soluble urethane resin composition was a transparent solution, had a solids content of 30 % by mass and an initial solution viscosity of 6,000 mPa·s (measuring temperature: 25°C) and had a solution viscosity after keeping for 3 months under a room temperature condition of 6,000 mPa·s. Thus, a viscosity rise ratio after keeping for 3 months to the foregoing initial solution viscosity was 1.00, and excellent storage stability was revealed.

Also, physical properties of a film obtained using the alcohol-soluble urethane resin composition of the invention and cell shape retaining properties of a porous body obtained using the same are shown in Table 1. All of solvent resistance (alcohol resistance) and chemical resistance (DMF resistance) of the film and cell shape retaining properties of the porous body were excellent, and even when the alcohol-soluble urethane resin composition of the invention was coated on a porous layer, the porous layer was not broken.

[Example 2] As the first step, a reactor equipped with a stirrer, a thermometer and a nitrogen gas inlet pipe was charged with 280 g of IPDI and 1,000 g of polyoxypropylene diol (one having a molecular weight of 2,000), and the mixture was allowed to react with stirring at 100°C for 6 hours under a nitrogen gas stream in the absence of a solvent, thereby synthesizing a urethane prepolymer (x).

Subsequently, as the second step, 217 g of the foregoing urethane prepolymer (x) was added to a mixture consisting of 20.80 g of isophoronediamine, 0.85 g of N-β-(aminoethyl)-γ-aminopropyltrimethoxysilane, 0.99 g of di(n-butyl)amine and 559 g of isopropyl alcohol (IPA) as the alcohol (B) while stirring, and the mixture was allowed to react at 50°C for 3 hours, thereby obtaining an alcohol-soluble urethane resin composition containing a polyurethane resin (A) (Mn: 170,000) according to the invention.

The foregoing alcohol-soluble urethane resin composition was a transparent solution, had a solids content of 30 % by mass and an initial solution viscosity of 5,000 mPa·s (measuring temperature: 25°C) and had a solution viscosity after keeping for 3 months under a room temperature condition of 5,000 mPa·s. Thus, a viscosity rise ratio after keeping for 3 months to the foregoing initial, solution viscosity was 1.00, and excellent storage stability was revealed.

Also, physical properties of a film obtained using the alcohol-soluble urethane resin composition of the invention and cell shape retaining properties of a porous body obtained using the same are shown in Table 1. All of solvent resistance (alcohol resistance) and chemical resistance (DMF resistance) of the film and cell shape retaining properties of the porous body were excellent, and even when the alcohol-soluble urethane resin composition of the invention was coated on a porous layer, the porous layer was not broken.

[Comparative Example 3A] As the first step, a reactor equipped with a stirrer, a thermometer and a nitrogen gas inlet pipe was charged with 280 g of IPDI and 1,000 g of polyoxypropylene diol (one having a molecular weight of 2,000), and the mixture was allowed to react with stirring at 100°C for 6 hours under a nitrogen gas stream in the absence of a solvent, thereby synthesizing a urethane prepolymer (x).

Subsequently, as the second step, 217 g of the foregoing urethane prepolymer (x) and 1.95 g of γ-isocyanatopropyltriethoxysilane were added to a mixture consisting of 21.66 g of isophoronediamine, 1.02 g of di(n-butyl)amine and 564 g of isopropyl alcohol (IPA) as the alcohol (B) while stirring, and the mixture was allowed to react at 50°C for 3 hours, thereby obtaining an alcohol-soluble urethane resin composition containing a polyurethane resin (A) (Mn: 150,000) according to the invention.

The foregoing alcohol-soluble urethane resin composition was a transparent solution, had a solids content of 30 % by mass and an initial solution viscosity of 3,500 mPa·s (measuring temperature: 25°C) and had a solution viscosity after keeping for 3 months under a room temperature condition of 3,500 mPa·s. Thus, a viscosity rise ratio after keeping for 3 months to the foregoing initial viscosity was 1.00, and excellent storage stability was revealed.

Also, physical properties of a film obtained using the alcohol-soluble urethane resin composition of the invention and cell shape retaining properties of a porous body obtained using the same are shown in Table 1. All of solvent resistance (alcohol resistance) and chemical resistance (DMF resistance) of the film and cell shape retaining properties of the porous body were excellent, and even when the alcohol-soluble urethane resin composition of the invention was coated on a porous layer, the porous layer was not broken.

[Example 4] As the first step, a reactor equipped with a stirrer, a thermometer and a nitrogen gas inlet pipe was charged with 328 g of dicyclohexylmethane diisocyanate (hydrogenated MDI) and 1,000 g of polyoxyethylene glycol (one having a molecular weight of 2,000), and the mixture was allowed to react at 100°C for 6 hours under a nitrogen gas stream in the absence of a solvent, thereby synthesizing a urethane prepolymer (x).

Subsequently, as the second step, 139 g of the foregoing urethane prepolymer (x) was added to a mixture consisting of 15 g of dicyclohexylmethanediamine (hydrogenated MDA), 3.16 g of γ-aminopropyltriethoxysilane and 367 g of isopropyl alcohol (IPA) as the alcohol (B) while stirring, and the mixture was allowed to react at 50°C for 3 hours, thereby obtaining an alcohol-soluble urethane resin composition containing a polyurethane resin (A) according to the invention.

The foregoing alcohol-soluble urethane resin composition was a transparent solution, had a solids content of 30 % by mass and an initial solution viscosity of 30,000 mPa·s (measuring temperature: 25°C) and had a solution viscosity after keeping for 3 months under a room temperature condition of 33,000 mPa·s. Thus, a viscosity rise ratio after keeping for 3 months to the foregoing initial solution viscosity was 1.10, and excellent storage stability was revealed.

Also, physical properties of a film obtained using the alcohol-soluble urethane resin composition of the invention and resistance to dissolution of a porous body obtained using the same are shown in Table 1. All of solvent resistance (alcohol resistance) and chemical resistance (DMF resistance) of the film and cell shape retaining properties of the porous body were excellent, and even when the alcohol-soluble urethane resin composition of the invention was coated on a porous layer, the porous layer was not broken.

[Example 5] As the first step, a reactor equipped with a stirrer, a thermometer and a nitrogen gas inlet pipe was charged with 421 g of hexamethylene diisocyanate (HDI) and 500 g of P-510 (manufactured by Kuraray Co., Ltd.; one having a number average molecular weight of 500) which is a polyester diol made of, as raw materials, 3-methylpentanediol and adipic acid, and the mixture was allowed to react at 100°C for 6 hours under a nitrogen gas stream in the absence of a solvent, thereby synthesizing a urethane prepolymer (x).

Subsequently, as the second step, 149 g of the foregoing urethane prepolymer (x) was added to a mixture consisting of 40 g of isophoronediamine, 3.22 g of γ-aminopropyltriethoxysilane and 449 g of isopropyl alcohol (IPA) as the alcohol (B) while stirring, and the mixture was allowed to react at 50°C for 3 hours, thereby obtaining an alcohol-soluble urethane resin composition containing a polyurethane resin (A) according to the invention.

The foregoing alcohol-soluble urethane resin composition was a transparent solution, had a solids content of 30 % by mass and an initial solution viscosity of 9,300 mPa·s (measuring temperature: 25°C) and had a solution viscosity after keeping for 3 months under a room temperature condition of 9,900 mPa·s. Thus, a viscosity rise ratio after keeping for 3 months to the foregoing initial solution viscosity was 1.06, and excellent storage stability was revealed.

Also, physical properties of a film obtained using the foregoing alcohol-soluble urethane resin composition and cell shape retaining properties of a porous body obtained using the same are shown in Table 1. All of solvent resistance (alcohol resistance) and chemical resistance (DMF resistance) of the film and cell shape retaining properties of the porous body were excellent, and even when the foregoing alcohol-soluble urethane resin composition was coated on a porous layer, the porous layer was not broken.

[Example 6] As the second step, a reactor equipped with a stirrer, a thermometer and a nitrogen gas inlet pipe was charged with 310 g of IPDI, 348 g of T5652 (manufactured by Asahi Kasei Chemicals Corporation; one having a number average molecular weight of 2,000) which is a polycarbonate diol obtained by copolymerizing pentanediol and hexanediol (5/5) and 365 g of polyoxypropylene diol (one having a molecular weight of 700), and the mixture was allowed to react with stirring at 100°C for 6 hours under a nitrogen gas stream in the absence of a solvent, thereby synthesizing a urethane prepolymer (x).

Subsequently, as the second step, 200 g of the foregoing urethane prepolymer (x) was added to a mixture consisting of 26 g of isophoronediamine, 5.88 g of γ-aminopropyltriethoxysilane and 541 g of ethanol as the alcohol (B) while stirring, and the mixture was allowed to react at 50°C for 3 hours, thereby obtaining an alcohol-soluble urethane resin composition containing a polyurethane resin (A) according to the invention.

The foregoing alcohol-soluble urethane resin composition was a transparent solution, had a solids content of 30 % by mass and an initial solution viscosity of 8,600 mPa·s (measuring temperature: 25°C) and had a solution viscosity after keeping for 3 months under a room temperature condition of 9,000 mPa·s. Thus, a viscosity rise ratio after keeping for 3 months to the foregoing initial solution viscosity was 1.05, and excellent storage stability was revealed.

Also, physical properties of a film obtained using the foregoing alcohol-soluble urethane resin composition and cell shape retaining properties of a porous body obtained using the same are shown in Table 1. All of solvent resistance (alcohol resistance) and chemical resistance (DMF resistance) of the film and cell shape retaining properties of the porous body were excellent, and even when the alcohol-soluble urethane resin composition of the invention was coated on a porous layer, the porous layer was not broken.

[Example 7] As the first step, a reactor equipped with a stirrer, a thermometer and a nitrogen gas inlet pipe was charged with 280 g of isophorone diisocyanate (IPDI) and 1,000 g of polyoxypropylene diol (one having a molecular weight of 2,000), and the mixture was allowed to react with stirring at 100°C for 6 hours under a nitrogen gas stream in the absence of a solvent, thereby synthesizing a urethane prepolymer (x).

Subsequently, as the second step, 217 g of the foregoing urethane prepolymer (x) was added to a mixture consisting of 20 g of isophoronediamine and 1.57 g of γ-aminopropyltriethoxysilane while stirring, and the mixture was allowed to react at 50°C for 3 hours. Thereafter, 557 g of isopropyl alcohol (IPA) as the alcohol (B) was added and dissolved, thereby obtaining an alcohol-soluble urethane resin composition containing a polyurethane resin (A) (Mn: 190,000) according to the invention.

The foregoing alcohol-soluble urethane resin composition was a transparent solution, had a solids content of 30 % by mass and an initial solution viscosity of 7,000 mPa·s (measuring temperature: 25°C) and had a solution viscosity after keeping for 3 months under a room temperature condition of 7,000 mPa·s. Thus, a viscosity rise ratio after keeping for 3 months to the foregoing initial solution viscosity was 1.00, and excellent storage stability was revealed.

Also, physical properties of a film obtained using the alcohol-soluble urethane resin composition of the invention and cell shape retaining properties of a porous body obtained using the same are shown in Table 1. All of solvent resistance (alcohol resistance) and chemical resistance (DMF resistance) of the film and cell shape retaining properties of the porous body were excellent, and even when the alcohol-soluble urethane resin composition of the invention was coated on a porous layer, the porous layer was not broken.

[Example 8] As the first step, a reactor equipped with a stirrer, a thermometer and a nitrogen gas inlet pipe was charged with 1,000 g of polyoxypropylene glycol (one having a molecular weight of 2,000) and 279 g of isophorone diisocyanate (IPDI), and the mixture was allowed to react with stirring at 100°C for 6 hours under a nitrogen gas stream in the absence of a solvent, thereby synthesizing a urethane prepolymer (x).

Subsequently, as the second step, 20.00 g of isophoronediamine (IPDA) and 1.61 g of γ-aminopropyltriethoxysilane were added to a mixture consisting of 207 g of the foregoing urethane prepolymer (x) and 533 g of isopropyl alcohol (IPA) as the alcohol (B) while stirring, and the mixture was allowed to react at 50°C for 3 hours, thereby obtaining an alcohol-soluble urethane resin composition using a polyurethane resin (A) (Mn: 175,000) according to the invention.

The foregoing alcohol-soluble urethane resin composition was a transparent solution, had a solids content of 30 % by mass and an initial solution viscosity of 7,000 mPa·s (measuring temperature: 25°C) and had a solution viscosity after keeping for 3 months under a room temperature condition of 7,200 mPa·s. Thus, a viscosity rise ratio after keeping for 3 months to the foregoing initial solution viscosity was 1.03, and excellent storage stability was revealed.

Also, physical properties of a film obtained using the foregoing alcohol-soluble urethane resin composition and resistance to dissolution of a porous body obtained using the same are shown in Table 1. Solvent resistance (alcohol resistance) and chemical resistance (DMF resistance) of the film and resistance to dissolution of the porous body were excellent. Also, the formation of a porous structure by wet film deposition could be confirmed, and pore-forming properties were good.

[Example 9] In Example 9, as the first step, the reaction was carried out using the same raw materials, charge amounts and operations as in Example 8, thereby synthesizing a urethane prepolymer (x).

Subsequently, as the second step, 20.80 g of IPDA, 0.87 g of N-β-(aminoethyl)-γ-aminopropyltrimethoxysilane and 1.01 g of di(n-butyl)amine were added to a mixture consisting of 222 g of the foregoing urethane prepolymer (x) and 571 g of IPA as the alcohol (B) while stirring, and the mixture was allowed to react at 50°C for 3 hours, thereby obtaining an alcohol-soluble urethane resin composition using a polyurethane resin (A) (Mn: 170,000) according to the invention.

The foregoing alcohol-soluble urethane resin composition was a transparent solution, had a solids content of 30 % by mass and an initial solution viscosity of 6,600 mPa·s (measuring temperature: 25°C) and had a solution viscosity after keeping for 3 months under a room temperature condition of 6,700 mPa·s. Thus, a viscosity rise ratio after keeping for 3 months to the foregoing initial viscosity was 1.02, and excellent storage stability was revealed.

Also, physical properties of a film obtained using the foregoing alcohol-soluble urethane resin composition and resistance to dissolution of the porous body are shown in Table 1. Solvent resistance (alcohol resistance) and chemical resistance (DMF resistance) of the film and resistance to dissolution of a porous body obtained using the same were excellent. Also, the formation of a porous structure by wet film deposition could be confirmed, and pore-forming properties were good.

[Example 10] In Example 10, as the first step, the reaction was carried out using the same raw materials, charge amounts and operations as in Example 8, thereby synthesizing a urethane prepolymer (x).

Subsequently, as the second step, 21.66 g of IPDA, 1.02 g of di(n-butyl)amine and 1.95 g of γ-isocyanatopropyltriethoxysilane were added to a mixture consisting of 217 g of the foregoing urethane prepolymer (x) and 564 g of IPA as the alcohol (B) while stirring, and the mixture was allowed to react at 50°C for 3 hours, thereby obtaining an alcohol-soluble urethane resin composition using a polyurethane resin (A) (Mn: 160,000) according to the invention.

The foregoing alcohol-soluble urethane resin composition was a transparent solution, had a solids content of 30 % by mass and an initial solution viscosity of 5,900 mPa·s (measuring temperature: 25°C) and had a solution viscosity after keeping for 3 months under a room temperature condition of 6,400 mPa·s. Thus, a viscosity rise ratio after keeping for 3 months to the foregoing initial solution viscosity was 1.08, and excellent storage stability was revealed.

Also, physical properties of a film obtained using the foregoing alcohol-soluble urethane resin composition and resistance to dissolution of a porous body obtained using the same are shown in Table 1. Solvent resistance (alcohol resistance) and chemical resistance (DMF resistance) of the film and resistance to dissolution of the porous body were excellent. Also, the formation of a porous structure by wet film deposition could be confirmed, and pore-forming properties were good.

[Example 11] As the first step, a reactor equipped with a stirrer, a thermometer and a nitrogen gas inlet pipe was charged with 1,000 g of polyoxytetramethylene glycol (one having a molecular weight of 2,000) and 328 g of dicyclohexylmethane diisocyanate (hydrogenated MDI), and the mixture was allowed to react with stirring at 100°C for 6 hours under a nitrogen gas stream in the absence of a solvent, thereby synthesizing a urethane prepolymer (x).

Subsequently, as the second step, 15.00 g of dicyclohexylmethanediamine (hydrogenated MDA) and 3.16 g of γ-aminopropyltriethoxysilane were added to a mixture consisting of 139 g of the foregoing urethane prepolymer (x) and 367 g of ethanol as the alcohol (B) while stirring, and the mixture was allowed to react at 50°C for 3 hours, thereby obtaining an alcohol-soluble urethane resin composition using a polyurethane resin (A) according to the invention.

The foregoing alcohol-soluble urethane resin composition was a transparent solution, had a solids content of 30 % by mass and an initial solution viscosity of 38,000 mPa·s (measuring temperature: 25°C) and had a solution viscosity after keeping for 3 months under a room temperature condition of 37,500 mPa·s. Thus, a viscosity rise ratio after keeping for 3 months to the foregoing initial solution viscosity was 0.99, and excellent storage stability was revealed.

Also, physical properties of a film obtained using the foregoing alcohol-soluble urethane resin composition and resistance to dissolution of a porous body obtained using the same are shown in Table 1. Solvent resistance (alcohol resistance) and chemical resistance (DMF resistance) of the film and resistance to dissolution of the porous body were excellent. Also, the formation of a porous structure by wet film deposition could be confirmed, and pore-forming properties were good.

[Example 12] As the first step, a reactor equipped with a stirrer, a thermometer and a nitrogen gas inlet pipe was charged with 500 g of P-510 (manufactured by Kuraray Co., Ltd.; one having a number average molecular weight of 500) which is a polyester diol made of, as raw materials, 3-methylpentanediol and adipic acid and 421 g of hexamethylene diisocyanate (HDI), and the mixture was allowed to react with stirring at 100°C for 6 hours under a nitrogen gas stream in the absence of a solvent, thereby synthesizing a urethane prepolymer (x).

Subsequently, as the second step, 40.00 g of IPDA and 3.22 g of γ-aminopropyltriethoxysilane were added to a mixture consisting of 149 g of the foregoing urethane prepolymer (x) and 449 g of IPA as the alcohol (B) while stirring, and the mixture was allowed to react at 50°C for 3 hours, thereby obtaining an alcohol-soluble urethane resin composition using a polyurethane resin (A) according to the invention.

The foregoing alcohol-soluble urethane resin composition was a transparent solution, had a solids content of 30 % by mass and an initial solution viscosity of 10,100 mPa·s (measuring temperature: 25°C) and had a solution viscosity after keeping for 3 months under a room temperature condition of 11,200 mPa·s. Thus, a viscosity rise ratio after keeping for 3 months to the foregoing initial solution viscosity was 1.11, and excellent storage stability was revealed.

Also, physical properties of a film obtained using the foregoing alcohol-soluble urethane resin composition and resistance to dissolution of a porous body obtained using the same are shown in Table 1. Solvent resistance (alcohol resistance) and chemical resistance (DMF resistance) of the film and resistance to dissolution of the porous body were excellent. Also, the formation of a porous structure by wet film deposition could be confirmed, and pore-forming properties were good.

[Example 13] As the first step, a reactor equipped with a stirrer, a thermometer and a nitrogen gas inlet pipe was charged with 500 g of polyoxypropylene glycol (one having a molecular weight of 2,000), 500 g of T5651 (manufactured by Asahi Kasei Chemicals Corporation; one having a number average molecular weight of 1,000) which is a polycarbonate diol obtained by copolymerizing pentanediol and hexanediol (5/5) and 419 g of IPDI, and the mixture was allowed to react with stirring at 100°C for 6 hours under a nitrogen gas stream in the absence of a solvent, thereby synthesizing a urethane prepolymer (x).

Subsequently, as the second step, 20.00 g of IPDA and 1.62 g of γ-aminopropyltriethoxysilane were added to a mixture consisting of 153 g of the foregoing urethane prepolymer (x) and 407 g of ethanol as the alcohol (B) while stirring, and the mixture was allowed to react at 50°C for 3 hours, thereby obtaining an alcohol-soluble urethane resin composition using a polyurethane resin (A) according to the invention.

The foregoing alcohol-soluble urethane resin composition was a transparent solution, had a solids content of 30 % by mass.and an initial solution viscosity of 34,000 mPa·s (measuring temperature: 25°C) and had a solution viscosity after keeping for 3 months under a room temperature condition of 37,000 mPa·s. Thus, a viscosity rise ratio after keeping for 3 months to the foregoing initial solution viscosity was 1.09, and excellent storage stability was revealed.

Also, physical properties of a film obtained using the foregoing alcohol-soluble urethane resin composition and cell shape retaining properties of a porous body obtained using the same are shown in Table 1. Alcohol resistance and chemical resistance (DMF resistance) of the film and cell shape retaining properties of the porous body were excellent. Also, the formation of a porous structure by wet film deposition could be confirmed, and pore-forming properties were good.

[Example 14] As the first step, a reactor equipped with a stirrer, a thermometer and a nitrogen gas inlet pipe was charged with 279 g of isophorone diisocyanate (IPDI) and 1,000 g of polyoxypropylene glycol (one having a molecular weight of 2,000), and the mixture was allowed to react with stirring at 100°C for 6 hours under a nitrogen gas stream in the absence of a solvent, thereby synthesizing a urethane prepolymer (x').

Subsequently, as the second step, 207 g of the foregoing urethane prepolymer (x') was added to a mixture consisting of 20.00 g of isophoronediamine (IPDA), 1.61 g of γ-aminopropyltriethoxysilane and 533 g of isopropyl alcohol (IPA) as the alcohol (B) while stirring, and the mixture was allowed to react at 50°C for 3 hours, thereby obtaining an alcohol-soluble urethane resin composition for moisture-permeable film containing a polyurethane resin (A') (Mn: 170,000).

The foregoing alcohol-soluble urethane resin composition for moisture-permeable film was a transparent solution, had a solids content of 30 % by mass and an initial solution viscosity of 18,000 mPa·s (measuring temperature: 25°C) and had a solution viscosity after keeping for 3 months under a room temperature condition of 18,500 mPa·s. Thus, a viscosity rise ratio after keeping for 3 months to the foregoing initial solution viscosity was 1.03, and excellent storage stability was revealed.

Also, physical properties and moisture permeability of a polyurethane film (film) obtained using the foregoing alcohol-soluble urethane resin composition for moisture-permeable film and resistance to dissolution of a porous body obtained using the same are shown in Table 1. All of solvent resistance (alcohol resistance), chemical resistance (DMF resistance) and moisture permeability of the film and resistance to dissolution of the porous body were excellent, and even when the foregoing alcohol-soluble urethane resin composition for moisture-permeable film was coated on a porous layer, the porous layer was not broken or dissolved.

[Example 15] In Example 15, as the first step, the reaction was carried out using the same raw materials, charge amounts and operations as in Example 14, thereby synthesizing a urethane prepolymer (x').

Subsequently, as the second step, 222 g of the foregoing urethane prepolymer (x') was added to a mixture consisting of 20.80 g of IPDA, 0.87 g of N-β-(aminoethyl)-γ-aminopropyltrimethoxysilane, 1.01 g of di(n-butyl)amine and 571 g of IPA as the alcohol (B) while stirring, and the mixture was allowed to react at 50°C for 3 hours, thereby obtaining an alcohol-soluble urethane resin composition for moisture-permeable film containing a polyurethane resin (A') (Mn: 165,000).

The foregoing alcohol-soluble urethane resin composition for moisture-permeable film was a transparent solution, had a solids content of 30 % by mass and an initial solution viscosity of 16,000 mPa·s (measuring temperature: 25°C) and had a solution viscosity after keeping for 3 months under a room temperature condition of 17,500 mPa·s. Thus, a viscosity rise ratio after keeping for 3 months to the foregoing initial solution viscosity was 1.09, and excellent storage stability was revealed.

Also, physical properties and moisture permeability of a polyurethane film (film) obtained using the foregoing alcohol-soluble urethane resin composition for moisture-permeable film and resistance to dissolution of a porous body obtained using the same are shown in Table 1. All of solvent resistance (alcohol resistance), chemical resistance (DMF resistance) and moisture permeability of the film and resistance to dissolution of the porous body were excellent, and even when the foregoing alcohol-soluble urethane resin composition for moisture-permeable film was coated on a porous layer, the porous layer was not broken or dissolved.

[Comparative Example 16A] In Example 16, as the first step, the reaction was carried out using the same raw materials, charge amounts and operations as in Example 14, thereby synthesizing a urethane prepolymer (x').

Subsequently, as the second step, 217 g of the foregoing urethane prepolymer (x') and 1.95 g of γ-isocyanatopropyltriethoxysilane were added to a mixture consisting of 21.66 g of IPDA, 1.02 g of di(n-butyl)amine and 564 g of IPA as the alcohol (B) while stirring, and the mixture was allowed to react at 50°C for 3 hours, thereby obtaining an alcohol-soluble urethane resin composition for moisture-permeable film containing a polyurethane resin (A') (Mn: 160,000).

The foregoing alcohol-soluble urethane resin composition for moisture-permeable film was a transparent solution, had a solids content of 30 % by mass and an initial solution viscosity of 19,000 mPa·s (measuring temperature: 25°C) and had a solution viscosity after keeping for 3 months under a room temperature condition of 21,000 mPa·s. Thus, a viscosity rise ratio after keeping for 3 months to the foregoing initial solution viscosity was 1.11, and excellent storage stability was revealed.

Also, physical properties and moisture permeability of a polyurethane film (film) obtained using the foregoing alcohol-soluble urethane resin composition for moisture-permeable film and resistance to dissolution of a porous body obtained using the same are shown in Table 1. All of solvent resistance (alcohol resistance), chemical resistance (DMF resistance) and moisture permeability of the film and resistance to dissolution of the porous body were excellent, and even when the foregoing alcohol-soluble urethane resin composition for moisture-permeable film was coated on a porous layer, the porous layer was not broken or dissolved.

[Example 17] As the first step, a reactor equipped with a stirrer, a thermometer and a nitrogen gas inlet pipe was charged with 491 g of dicyclohexylmethane diisocyanate (hydrogenated MDI), 500 g of polyoxyethylene glycol (one having a molecular weight of 2,000) and 500 g of P-1010 (manufactured by Kuraray Co., Ltd.; one having a number average molecular weight of 1,000) which is a polyester diol made of 3-methylpentanediol and adipic acid, and the mixture was allowed to react at 100°C for 6 hours under a nitrogen gas stream in the absence of a solvent, thereby synthesizing a urethane prepolymer (x').

Subsequently, as the second step, 161 g of the foregoing urethane prepolymer (x') was added to a mixture consisting of 20.00 g of IPDA, 1.61 g of γ-aminopropyltriethoxysilane and 426 g of IPA as the alcohol (B) while stirring, and the mixture was allowed to react at 50°C for 3 hours, thereby obtaining an alcohol-soluble urethane resin composition for moisture-permeable film containing a polyurethane resin (A') (Mn: 140,000).

The foregoing alcohol-soluble urethane resin composition for moisture-permeable film was a transparent solution, had a solids content of 30 % by mass and an initial solution viscosity of 20,000 mPa·s (measuring temperature: 25°C) and had a solution viscosity after keeping for 3 months under a room temperature condition of 22,000 mPa·s. Thus, a viscosity rise ratio after keeping for 3 months to the foregoing initial solution viscosity was 1.10, and excellent storage stability was revealed.

Also, physical properties and moisture permeability of a polyurethane film (film) obtained using the foregoing alcohol-soluble urethane resin composition for moisture-permeable film and resistance to dissolution of a porous body obtained using the same are shown in Table 1. All of solvent resistance (alcohol resistance), chemical resistance (DMF resistance) and moisture permeability of the film and resistance to dissolution of the porous body were excellent, and even when the foregoing alcohol-soluble urethane resin composition for moisture-permeable film was coated on a porous layer, the porous layer was not broken or dissolved.

[Example 18] As the first step, a reactor equipped with a stirrer, a thermometer and a nitrogen gas inlet pipe was charged with 372 g of IPDI, 500 g of polyoxyethylene glycol (one having a molecular weight of 3,000) and 500 g of polyoxypropylene glycol (one having a molecular weight of 1,000), and the mixture was allowed to react at 100°C for 6 hours under a nitrogen gas stream in the absence of a solvent, thereby synthesizing a urethane prepolymer (x').

Subsequently, as the second step, 135 g of the foregoing urethane prepolymer (x') was added to a mixture consisting of 20.00 g of dicyclohexylmethanediamine (hydrogenated MDA), 1.30 g of γ-aminopropyltriethoxysilane and 365 g of IPA as the alcohol (B) while stirring, and the mixture was allowed to react at 50°C for 3 hours, thereby obtaining an alcohol-soluble urethane resin composition for moisture-permeable film containing a polyurethane resin (A') (Mn: 175,000).

The foregoing alcohol-soluble urethane resin composition for moisture-permeable film was a transparent solution, had a solids content of 30 % by mass and an initial solution viscosity of 36,000 mPa·s (measuring temperature: 25°C) and had a solution viscosity after keeping for 3 months under a room temperature condition of 36,500 mPa·s. Thus, a viscosity rise ratio after keeping for 3 months to the foregoing initial solution viscosity was 1.01, and excellent storage stability was revealed.

Also, physical properties and moisture permeability of a polyurethane film (film) obtained using the foregoing alcohol-soluble urethane resin composition for moisture-permeable film and resistance to dissolution of a porous body obtained using the same are shown in Table 1. All of solvent resistance (alcohol resistance), chemical resistance (DMF resistance) and moisture permeability of the film and resistance to dissolution of the porous body were excellent, and even when the foregoing alcohol-soluble urethane resin composition for moisture-permeable film was coated on a porous layer, the porous layer was not broken or dissolved.

[Example 19] As the first step, a reactor equipped with a stirrer, a thermometer and a nitrogen gas inlet pipe was charged with 419 g of IPDI, 500 g of polyoxyethylene glycol (one having a molecular weight of 2,000) and 500 g of T5651 (manufactured by Asahi Kasei Chemicals Corporation; one having a number average molecular weight of 1,000) which is a polycarbonate diol obtained by copolymerizing pentanediol and hexanediol (5/5), and the mixture was allowed to react at 100°C for 6 hours under a nitrogen gas stream in the absence of a solvent, thereby synthesizing a urethane prepolymer (x').

Subsequently, as the second step, 153 g of the foregoing urethane prepolymer (x') was added to a mixture consisting of 20.00 g of IPDA, 1.62 g of γ-aminopropyltriethoxysilane and 407 g of ethanol as the alcohol (B) while stirring, and the mixture was allowed to react at 50°C for 3 hours, thereby obtaining an alcohol-soluble urethane resin composition for moisture-permeable film containing a polyurethane resin (A') (Mn: 170,000).

The foregoing alcohol-soluble urethane resin composition for moisture-permeable film was a transparent solution, had a solids content of 30 % by mass and an initial solution viscosity of 46,000 mPa·s (measuring temperature: 25°C) and had a solution viscosity after keeping for 3 months under a room temperature condition of 43,000 mPa·s. Thus, a viscosity rise ratio after keeping for 3 months to the foregoing initial solution viscosity was 0.93, and excellent storage stability was revealed.

Also, physical properties and moisture permeability of a polyurethane film (film) obtained using the foregoing alcohol-soluble urethane resin composition for moisture-permeable film and resistance to dissolution of a porous body obtained using the same are shown in Table 1. All of solvent resistance (alcohol resistance), chemical resistance (DMF resistance) and moisture permeability of the film and resistance to dissolution of the porous body were excellent, and even when the foregoing alcohol-soluble urethane resin composition for moisture-permeable film was coated on a porous layer, the porous layer was not broken or dissolved.

[Example 20] In Example 20, as the first step, the reaction was carried out using the same raw materials, charge amounts and operations as in Example 14, thereby synthesizing a urethane prepolymer (x').

Subsequently, as the second step, 207 g of the foregoing urethane prepolymer (x') was added to a mixture consisting of 20.00 g of isophoronediamine (IPDA) and 1.61 g of γ-aminopropyltriethoxysilane while stirring, and the mixture was allowed to react at 50°C for 3 hours. Thereafter, 533 g of isopropyl alcohol (IPA) as the alcohol (B) was added and dissolved, thereby obtaining an alcohol-soluble urethane resin composition for moisture-permeable film containing a polyurethane resin (A') (Mn: 175,000).

The foregoing alcohol-soluble urethane resin composition for moisture-permeable film was a transparent solution, had a solids content of 30 % by mass and an initial solution viscosity of 19,000 mPa·s (measuring temperature: 25°C) and had a solution viscosity after keeping for 3 months under a room temperature condition of 19,800 mPa·s. Thus, a viscosity rise ratio after keeping for 3 months to the foregoing initial solution viscosity was 1.04, and excellent storage stability was revealed.

Also, physical properties and moisture permeability of a polyurethane film (film) obtained using the foregoing alcohol-soluble urethane resin composition for moisture-permeable film and resistance to dissolution of a porous body obtained using the same are shown in Table 1. All of solvent resistance (alcohol resistance), chemical resistance (DMF resistance) and moisture permeability of the film and resistance to dissolution of the porous body were excellent, and even when the foregoing alcohol-soluble urethane resin composition for moisture-permeable film was coated on a porous layer, the porous layer was not broken or dissolved.

[Example 21] As the first step, a reactor equipped with a stirrer, a thermometer and a nitrogen gas inlet pipe was charged with 1,000 g of polyoxyethylene glycol (one having a molecular weight of 2,000) and 279 g of isophorone diisocyanate (IPDI), and the mixture was allowed to react with stirring at 100°C for 6 hours under a nitrogen gas stream in the absence of a solvent, thereby synthesizing a urethane prepolymer (x').

Subsequently, as the second step, 20.00 g of isophoronediamine (IPDA) and 1.61 g of γ-aminopropyltriethoxysilane were added to a mixture consisting of 207 g of the foregoing urethane prepolymer (x') and 533 g of isopropyl alcohol (IPA) as the alcohol (B) while stirring, and the mixture was allowed to react at 50°C for 3 hours, thereby obtaining an alcohol-soluble urethane resin composition for moisture-permeable film containing a polyurethane resin (A') (Mn: 150,000).

The foregoing alcohol-soluble urethane resin composition for moisture-permeable film was a transparent solution, had a solids content of 30 % by mass and an initial solution viscosity of 14,000 mPa·s (measuring temperature: 25°C) and had a solution viscosity after keeping for 3 months under a room temperature condition of 16,000 mPa·s. Thus, a viscosity rise ratio after keeping for 3 months to the foregoing initial solution viscosity was 1.14, and excellent storage stability was revealed.

Also, physical properties and moisture permeability of a polyurethane film (film) obtained using the foregoing alcohol-soluble urethane resin composition for moisture-permeable film and resistance to dissolution of a porous body obtained using the same are shown in Table 1. All of solvent resistance (alcohol resistance), chemical resistance (DMF resistance) and moisture permeability of the film and resistance to dissolution of the porous body were excellent, and even when the foregoing alcohol-soluble urethane resin composition for moisture-permeable film was coated on a porous layer, the porous layer was not broken or dissolved.

[Example 22] In Example 22, as the first step, the reaction was carried out using the same raw materials, charge amounts and operations as in Example 21, thereby synthesizing a urethane prepolymer (x').

Subsequently, as the second step, 20.80 g of IPDA, 0.87 g of N-β-(aminoethyl)-γ-aminopropyltrimethoxysilane and 1.01 g of di(n-butyl)amine were added to a mixture consisting of 222 g of the foregoing urethane prepolymer (x') and 571 g of IPA as the alcohol (B) while stirring, and the mixture was allowed to react at 50°C for 3 hours, thereby obtaining an alcohol-soluble urethane resin composition for moisture-permeable film containing a polyurethane resin (A') (Mn: 135,000).

The foregoing alcohol-soluble urethane resin composition for moisture-permeable film was a transparent solution, had a solids content of 30 % by mass and an initial solution viscosity of 12,000 mPa·s (measuring temperature: 25°C) and had a solution viscosity after keeping for 3 months under a room temperature condition of 13,500 mPa·s. Thus, a viscosity rise ratio after keeping for 3 months to the foregoing initial solution viscosity was 1.13, and excellent storage stability was revealed.

Also, physical properties and moisture permeability of a polyurethane film (film) obtained using the foregoing alcohol-soluble urethane resin composition for moisture-permeable film and resistance to dissolution of a porous body obtained using the same are shown in Table 1. All of solvent resistance (alcohol resistance), chemical resistance (DMF resistance) and moisture permeability of the film and resistance to dissolution of the porous body were excellent, and even when the foregoing alcohol-soluble urethane resin composition for moisture-permeable film was coated on a porous layer, the porous layer was not broken or dissolved.

[Example 23] In Example 23, as the first step, the reaction was carried out using the same raw materials, charge amounts and operations as in Example 21, thereby synthesizing a urethane prepolymer (x').

Subsequently, as the second step, 21.66 g of IPDA, 1.02 g of di(n-butyl)amine and 1.95 g of γ-isocyanatopropyltriethoxysilane were added to a mixture consisting of 217 g of the foregoing urethane prepolymer (x') and 564 g of IPA as the alcohol (B) while stirring, and the mixture was allowed to react at 50°C for 3 hours, thereby obtaining an alcohol-soluble urethane resin composition for moisture-permeable film containing a polyurethane resin (A') (Mn: 140,000).

The foregoing alcohol-soluble urethane resin composition for moisture-permeable film was a transparent solution, had a solids content of 30 % by mass and an initial solution viscosity of 16,000 mPa·s (measuring temperature: 25°C) and had a solution viscosity after keeping for 3 months under a room temperature condition of 18,000 mPa·s. Thus, a viscosity rise ratio after keeping for 3 months to the foregoing initial solution viscosity was 1.13, and excellent storage stability was revealed.

Also, physical properties and moisture permeability of a polyurethane film (film) obtained using the foregoing alcohol-soluble urethane resin composition for moisture-permeable film and resistance to dissolution of a porous body obtained using the same are shown in Table 1. All of solvent resistance (alcohol resistance), chemical resistance (DMF resistance) and moisture permeability of the film and resistance to dissolution of the porous body were excellent, and even when the foregoing alcohol-soluble urethane resin composition for moisture-permeable film was coated on a porous layer, the porous layer was not broken or dissolved.

[Example 24] As the first step, a reactor equipped with a stirrer, a thermometer and a nitrogen gas inlet pipe was charged with 500 g of polyoxyethylene glycol (one having a molecular weight of 2,000), 500 g of P-1010 (manufactured by Kuraray Co., Ltd.; one having a number average molecular weight of 1,000) which is a polyester diol made of 3-methylpentanediol and adipic acid and 491 g of dicyclohexylmethane diisocyanate (hydrogenated MDI), and the mixture was allowed to react at 100°C for 6 hours under a nitrogen gas stream in the absence of a solvent, thereby synthesizing a urethane prepolymer (x').

Subsequently, as the second step, 20.00 g of IPDA and 1.61 g of γ-aminopropyltriethoxysilane were added to a mixture consisting of 161 g of the foregoing urethane prepolymer (x') and 426 g of IPA as the alcohol (B) while stirring, and the mixture was allowed to react at 50°C for 3 hours, thereby obtaining an alcohol-soluble urethane resin composition for moisture-permeable film containing a polyurethane resin (A') (Mn: 135,000).

The foregoing alcohol-soluble urethane resin composition for moisture-permeable film was a transparent solution, had a solids content of 30 % by mass and an initial solution viscosity of 15,000 mPa·s (measuring temperature: 25°C) and had a solution viscosity after keeping for 3 months under a room temperature condition of 17,500 mPa·s. Thus, a viscosity rise ratio after keeping for 3 months to the foregoing initial solution viscosity was 1.17, and excellent storage stability was revealed.

Also, physical properties and moisture permeability of a polyurethane film (film) obtained using the foregoing alcohol-soluble urethane resin composition for moisture-permeable film and resistance to dissolution of a porous body obtained using the same are shown in Table 1. All of solvent resistance (alcohol resistance), chemical resistance (DMF resistance) and moisture permeability of the film and resistance to dissolution of the porous body were excellent, and even when the foregoing alcohol-soluble urethane resin composition for moisture-permeable film was coated on a porous layer, the porous layer was not broken or dissolved.

[Example 25] As the first step, a reactor equipped with a stirrer, a thermometer and a nitrogen gas inlet pipe was charged with 500 g of polyoxyethylene glycol (one having a molecular weight of 3,000), 500 g of polyoxypropylene glycol (one having a molecular weight of 1,000) and 372 g of IPDI, and the mixture was allowed to react at 100°C for 6 hours under a nitrogen gas stream in the absence of a solvent, thereby synthesizing a urethane prepolymer (x').

Subsequently, as the second step, 20.00 g of dicyclohexylmethanedimaine (hydrogenated MDA) and 1.30 g of γ-aminopropyltriethoxysilane were added to a mixture consisting of 135 g of the foregoing urethane prepolymer (x') and 365 g of IPA as the alcohol (B) while stirring, and the mixture was allowed to react at 50°C for 3 hours, thereby obtaining an alcohol-soluble urethane resin composition for moisture-permeable film containing a polyurethane resin (A') (Mn: 160,000).

The foregoing alcohol-soluble urethane resin composition for moisture-permeable film was a transparent solution, had a solids content of 30 % by mass and an initial solution viscosity of 32,000 mPa·s (measuring temperature: 25°C) and had a solution viscosity after keeping for 3 months under a room temperature condition of 34,500 mPa·s. Thus, a viscosity rise ratio after keeping for 3 months to the foregoing initial solution viscosity was 1.08, and excellent storage stability was revealed.

Also, physical properties and moisture permeability of a polyurethane film (film) obtained using the foregoing alcohol-soluble urethane resin composition for moisture-permeable film and resistance to dissolution of a porous body obtained using the same are shown in Table 1. All of solvent resistance (alcohol resistance), chemical resistance (DMF resistance) and moisture permeability of the film and resistance to dissolution of the porous body were excellent, and even when the foregoing alcohol-soluble urethane resin composition for moisture-permeable film was coated on a porous layer, the porous layer was not broken or dissolved.

[Example 26] As the first step, a reactor equipped with a stirrer, a thermometer and a nitrogen gas inlet pipe was charged with 500 g of polyoxyethylene glycol (one having a molecular weight of 2,000), 500 g of T5651 (manufactured by Asahi Kasei Chemicals Corporation; one having a number average molecular weight of 1,000) which is a polycarbonate diol obtained by copolymerizing pentanediol and hexanediol (5/5) and 419 g of IPDI, and the mixture was allowed to react at 100°C for 6 hours under a nitrogen gas stream in the absence of a solvent, thereby synthesizing a urethane prepolymer (x').

Subsequently, as the second step, 20.00 g of IPDA and 1.62 g of γ-aminopropyltriethoxysilane were added to a mixture consisting of 153 g of the foregoing urethane prepolymer (x') and 407 g of ethanol as the alcohol (B) while stirring, and the mixture was allowed to react at 50°C for 3 hours, thereby obtaining an alcohol-soluble urethane resin composition for moisture-permeable film containing a polyurethane resin (A') (Mn: 155,000).

The foregoing alcohol-soluble urethane resin composition for moisture-permeable film was a transparent solution, had a solids content of 30 % by mass and an initial solution viscosity of 41,000 mPa·s (measuring temperature: 25°C) and had a solution viscosity after keeping for 3 months under a room temperature condition of 40,000 mPa·s. Thus, a viscosity rise ratio after keeping for 3 months to the foregoing initial solution viscosity was 0.98, and excellent storage stability was revealed.

Also, physical properties and moisture permeability of a polyurethane film (film) obtained using the foregoing alcohol-soluble urethane resin composition for moisture-permeable film and cell shape retaining properties of a porous body obtained using the same are shown in Table 1. All of solvent resistance (alcohol resistance), chemical resistance (DMF resistance) and moisture permeability of the film and cell shape retaining properties of the porous body were excellent, and even when the foregoing alcohol-soluble urethane resin composition for moisture-permeable film was coated on a porous layer, the porous layer was not broken or dissolved.

[Comparative Example 1] As the first step, a reactor equipped with a stirrer, a thermometer and a nitrogen gas inlet pipe was charged with 280 g of isophorone diisocyanate (IPDI) and 1,000 g of polyoxypropylene diol (one having a molecular weight of 2,000), and the mixture was allowed to react with stirring at 100°C for 6 hours under a nitrogen gas stream in the absence of a solvent, thereby synthesizing a urethane prepolymer (x).

Subsequently, as the second step, 217 g of the foregoing urethane prepolymer (x) was added to a mixture consisting of 20 g of isophoronediamine, 1.29 g of di(n-butyl)amine and 557 g of IPA as the alcohol (B) while stirring, and the mixture was allowed to react at 50°C for 3 hours, thereby obtaining an alcohol-soluble urethane resin composition containing a polyurethane resin (A) (Mn: 190,000).

The foregoing alcohol-soluble urethane resin composition was a transparent solution, had a solids content of 30 % by mass and an initial solution viscosity of 10,000 mPa·s and had a solution viscosity after keeping for 3 months under a room temperature condition of 10,000 mPa·s. Thus, a viscosity rise ratio after keeping for 3 months to the foregoing initial solution viscosity was 1.00, and excellent storage stability was revealed.

However, though physical properties of a film obtained using the foregoing alcohol-soluble urethane resin composition and resistance to dissolution of a porous body obtained using the same are shown in Table 2, its flow starting temperature was lower by about 20°C than that in Example 1 having the same composition except for the presence or absence of a hydrolyzable silyl group, so that the heat resistance was inferior. Also, when the film was dipped in methanol or DMF overnight, the film was completely dissolved, and solvent resistance (alcohol resistance) and chemical resistance (DMF resistance) of the film and cell shape retaining properties of the porous body were remarkably inferior to those of the alcohol-soluble urethane resin having a hydrolyzable silyl group.

[Comparative Example 2] As the first step, a reactor equipped with a stirrer, a thermometer and a nitrogen gas inlet pipe was charged with 280 g of IPDI and 1,000 g of polyoxypropylene diol (one having a molecular weight of 2,000), and the mixture was allowed to react with stirring at 100°C for 6 hours under a nitrogen gas stream, thereby synthesizing a urethane prepolymer (x).

Subsequently, as the second step, 217 g of the foregoing urethane prepolymer (x) was added to a mixture consisting of 20 g of isophoronediamine, 1.57 g of $\gamma$-aminopropyltriethoxysilane and 557 g of dimethylformamide (DMF) while stirring, and the mixture was allowed to react at 50°C for 3 hours, thereby obtaining a urethane resin composition of a DMF single solvent system having a hydrolyzable silyl group and containing a polyurethane resin (A) (Mn: 220,000).

The foregoing urethane resin composition of a DMF single solvent system having a hydrolyzable silyl group was a transparent solution and had a solids content of 30 % by mass and an initial solution viscosity of 3,500 mPa·s. Only one month after keeping under a room temperature condition, this urethane resin composition of a DMF single solvent system having a hydrolyzable silyl group was gelated so that it was extremely inferior in storage stability.

Also, physical properties of a film obtained using this urethane resin composition of a DMF solvent system having a hydrolyzable silyl group and cell shape retaining properties of a porous body obtained using the same are shown in Table 2. Though physical properties of the film were on the same level as those of the alcohol-soluble urethane resin of the invention, when the urethane resin composition of a DMF solvent system having a hydrolyzable silyl group was coated on a polyurethane porous layer made of XOLTEX PX-300, the porous layer was dissolved and broken, and cell shape retaining properties of the porous body were remarkably inferior.

[Comparative Example 3] As the first step, a reactor equipped with a stirrer, a thermometer and a nitrogen gas inlet pipe was charged with 280 g of IPDI and 1,000 g of polyoxypropylene diol (one having a molecular weight of 2,000), and the mixture was allowed to react with stirring at 100°C for 6 hours under a nitrogen gas stream, thereby synthesizing a urethane prepolymer (x).

Subsequently, as the second step, 217 g of the foregoing urethane prepolymer (x) was added to a mixture consisting of 20.80 g of isophoronediamine, 0.85 g of N-$\beta$-(aminoethyl)-$\gamma$-aminopropyltrimethoxysilane, 0.99 g of di(n-butyl)amine and 559 g of dimethylformamide (DMF) while stirring, and the mixture was allowed to react at 50°C for 3 hours, thereby obtaining a urethane resin composition of a DMF single solvent system having a hydrolyzable silyl group and containing a polyurethane resin (A) (one having an Mn of 200,000).

The foregoing urethane resin composition of a DMF single solvent system having a hydrolyzable silyl group was a transparent solution and had a solids content of 30 % by mass and an initial solution viscosity of 2,400 mPa·s. Only one month after keeping under a room temperature condition, this urethane resin composition of a DMF single solvent system having a hydrolyzable silyl group was gelated so that it was extremely inferior in storage stability.

Also, physical properties of a film obtained using this urethane resin composition of a DMF solvent system having a hydrolyzable silyl group and cell shape retaining properties of a porous body obtained using the same are shown in Table 2. Though physical properties of the film were on the same level as those of the foregoing alcohol-soluble urethane resin of the invention, when the urethane resin composition of a DMF solvent system having a hydrolyzable silyl group was coated on a polyurethane porous layer made of XOLTEX PX-300, the porous layer was dissolved and broken, and cell shape retaining properties of the porous body were remarkably inferior.

[Comparative Example 4] As the first step, a reactor equipped with a stirrer, a thermometer and a nitrogen gas inlet pipe was charged with 328 g of dicyclohexylmethane diisocyanate (hydrogenated MDI) and 1,000 g of polyoxyethylene glycol (one having a molecular weight of 2,000), and the mixture was allowed to react at 100°C for 6 hours under a nitrogen gas stream, thereby synthesizing a urethane prepolymer (x).

Subsequently, as the second step, 139 g of the foregoing urethane prepolymer (x) was added to a mixture consisting of 15 g of dicyclohexylmethanediamine (hydrogenated MDA), 3.16 g of γ-aminopropyltriethoxysilane and 367 g of dimethylformamide (DMF) while stirring, and the mixture was allowed to react at 50°C for 3 hours, thereby obtaining a urethane resin composition of a DMF single solvent system having a hydrolyzable silyl group and containing a polyurethane resin (A).

The foregoing urethane resin composition of a DMF single solvent system having a hydrolyzable silyl group was a transparent solution and had a solids content of 30 % by mass and an initial solution viscosity of 18,000 mPa·s (measuring temperature: 25°C). Only one month after keeping under a room temperature condition, this urethane resin composition of a DMF single solvent system having a hydrolyzable silyl group was gelated so that it was extremely inferior in storage stability.

Also, physical properties of a film obtained using this urethane resin composition of a DMF solvent system having a hydrolyzable silyl group and cell shape retaining properties of a porous body obtained using the same are shown in Table 2. Though physical properties of the film were on the same level as those of the alcohol-soluble urethane resin of the invention, when the urethane resin composition of a DMF solvent system having a hydrolyzable silyl group was coated on a polyurethane porous layer made of XOLTEX PX-300, the porous layer was dissolved and broken, and cell shape retaining properties of the porous body were remarkably inferior.

[Comparative Example 5] As the first step, a reactor equipped with a stirrer, a thermometer and a nitrogen gas inlet pipe was charged with 421 g of hexamethylene diisocyanate (HDI) and 500 g of P-510 (manufactured by Kuraray Co., Ltd.; one having an Mn of 500) which is a polyester diol made of, as raw materials, 3-methylpentanediol and adipic acid, and the mixture was allowed to react at 100°C for 6 hours under a nitrogen gas stream, thereby synthesizing a urethane prepolymer (x).

Subsequently, as the second step, 149 g of the foregoing urethane prepolymer (x) was added to a mixture consisting of 40 g of isophoronediamine, 1.88 g of di(n-butyl)amine and 445 g of isopropyl alcohol (IPA) as the alcohol (B) while stirring, and the mixture was allowed to react at 50°C for 3 hours, thereby obtaining an alcohol-soluble urethane resin composition containing a polyurethane resin (A).

The foregoing alcohol-soluble urethane resin composition was a transparent solution, had a solids content of 30 % by mass and an initial solution viscosity of 14,000 mPa·s (measuring temperature: 25°C) and had a solution viscosity after keeping for 3 months under a room temperature condition of 13,500 mPa·s. Thus, a viscosity rise ratio after keeping for 3 months to the foregoing initial solution viscosity was 0.96, and excellent storage stability was revealed.

However, though physical properties of a film obtained using the foregoing alcohol-soluble urethane resin composition and cell shape retaining properties of a porous body obtained using the same are shown in Table 2, its flow starting temperature was lower by about 10°C than that in having the same composition except for the presence or absence of a hydrolyzable silyl group, so that the heat resistance was inferior. Also, when the film was dipped in methanol or DMF overnight, the film was completely dissolved, and solvent resistance (alcohol resistance) and chemical resistance (DMF resistance) of the film were remarkably inferior. Comparative Example 3A

[Comparative Example 6] In Comparative Example 6, as the first step, the reaction was carried out using the same raw materials, charge amounts and operations as in Example 8, thereby synthesizing a urethane prepolymer (x).

Subsequently, as the second step, 20.00 g of isophoronediamine (IPDA) and 0.94 g of di(n-butyl)amine were added to a mixture consisting of 207 g of the foregoing urethane prepolymer (x) and 532 g of isopropyl alcohol (IPA) as the alcohol (B) while stirring, and the mixture was allowed to react at 50°C for 3 hours, thereby obtaining an alcohol-soluble urethane resin composition using a polyurethane resin (A) (Mn: 170,000).

The foregoing alcohol-soluble urethane resin composition was a transparent solution, had a solids content of 30 % by mass and an initial solution viscosity of 6,900 mPa·s (measuring temperature: 25°C) and had a solution viscosity after keeping for 3 months under a room temperature condition of 7,200 mPa·s. Thus, a viscosity rise ratio after keeping for 3 months to the foregoing initial solution viscosity was 1.04, and excellent storage stability was revealed.

However, though physical properties of a film obtained using the foregoing alcohol-soluble urethane resin composition and resistance to dissolution of a porous body obtained using the same are shown in Table 2, its flow starting temperature was lower by about 20°C than that in Example 8 having the same composition except for the presence or absence of a hydrolyzable silyl group, so that the heat resistance was inferior.

Also, when the film obtained using the alcohol-soluble urethane resin composition of Comparative Example 6 was dipped in methanol or DMF for 24 hours, the film was completely dissolved, and solvent resistance (alcohol resistance) and chemical resistance (DMF resistance) of the film were remarkably inferior to those of the alcohol-soluble urethane resin having a hydrolyzable silyl group according to the invention.

[Comparative Example 7] In Comparative Example 7, as the first step, the reaction was carried out using the same raw materials, charge amounts and operations as in Example 8, thereby synthesizing a urethane prepolymer (x).

Subsequently, as the second step, 20.00 g of IPDA and 1.61 g of γ-aminopropyltriethoxysilane were added to a mixture consisting of 207 g of the foregoing urethane prepolymer (x) and 533 g of dimethylformamide (DMF) while stirring, and the mixture was allowed to react at 50°C for 3 hours, thereby obtaining a urethane resin composition of a DMF single solvent system having a hydrolyzable silyl group and using a polyurethane resin (A) (Mn: 220,000).

The foregoing urethane resin composition of a DMF single solvent system having a hydrolyzable silyl group was a transparent solution and had a solids content of 30 % by mass and an initial solution viscosity of 4,800 mPa·s. One month after keeping under a room temperature condition, this urethane resin composition of a DMF single solvent system having a hydrolyzable silyl group was gelated so that it was extremely inferior in storage stability to the alcohol-soluble urethane resin of the invention.

[Comparative Example 8] As the first step, a reactor equipped with a stirrer, a thermometer and a nitrogen gas inlet pipe was charged with 1,000 g of polyoxypropylene glycol (one having a molecular weight of 2,000) and 279 g of IPDI, and the mixture was allowed to react with stirring at 100°C for 6 hours under a nitrogen gas stream in the absence of a solvent, thereby synthesizing a urethane prepolymer (x).

Subsequently, as the second step, 20.80 g of IPDA, 0.87 g of N-β-(aminoethyl)-γ-aminopropyltrimethoxysilane and 1.01 g of di(n-butyl)amine were added to a mixture consisting of 222 g of the foregoing urethane prepolymer (x) and 571 g of dimethylformamide (DMF) while stirring, and the mixture was allowed to react at 50°C for 3 hours, thereby obtaining a urethane resin composition of a DMF single solvent system having a hydrolyzable silyl group and using a polyurethane resin (A) (Mn: 205,000).

The foregoing urethane resin composition of a DMF single solvent system having a hydrolyzable silyl group was a transparent solution and had a solids content of 30 % by mass and an initial solution viscosity of 5,200 mPa·s. One month after keeping under a room temperature condition, this urethane resin composition of a DMF single solvent system having a hydrolyzable silyl group was gelated so that it was extremely inferior in storage stability to the alcohol-soluble urethane resin of the invention.

[Comparative Example 9] As the first step, a reactor equipped with a stirrer, a thermometer and a nitrogen gas inlet pipe was charged with 1,000 g of polyoxypropylene glycol (one having a molecular weight of 2,000) and 279 g of IPDI, and the mixture was allowed to react at 100°C for 6 hours under a nitrogen gas stream in the absence of a solvent, thereby synthesizing a urethane prepolymer (x).

Subsequently, as the second step, 21.73 g of IPDA, 1.02 g of di(n-butyl)amine and 1.95 g of γ-isocyanatopropyltriethoxysilane were added to a mixture consisting of 217 g of the foregoing urethane prepolymer (x) and 564 g of DMF while stirring, and the mixture was allowed to react at 50°C for 3 hours, thereby obtaining a urethane resin composition of a DMF single solvent system having a hydrolyzable silyl group and using a polyurethane resin (A).

The foregoing urethane resin composition of a DMF single solvent system having a hydrolyzable silyl group was a transparent solution and had a solids content of 30 % and an initial solution viscosity of 5,300 mPa·s (measuring temperature: 25°C). One month after keeping under a room temperature condition, this urethane resin composition of a DMF single solvent system having a hydrolyzable silyl group was gelated so that it was extremely inferior in storage stability to the alcohol-soluble urethane resin of the invention.

[Comparative Example 10] As the first step, a reactor equipped with a stirrer, a thermometer and a nitrogen gas inlet pipe was charged with 500 g of P-510 (manufactured by Kuraray Co., Ltd.; one having a number average molecular weight of 500) which is a polyester diol made of, as raw materials, 3-methylpentanediol and adipic acid and 421 g of hexamethylene diisocyanate (HDI), and the mixture was allowed to react at 100°C for 6 hours under a nitrogen gas stream in the absence of a solvent, thereby synthesizing a urethane prepolymer (x).

Subsequently, as the second step, 40.00 g of IPDA and 1.88 g of di(n-butyl)amine were added to a mixture consisting of 149 g of the foregoing urethane prepolymer (x) and 445 g of IPA as the alcohol (B) while stirring, and the mixture was allowed to react at 50°C for 3 hours, thereby obtaining an alcohol-soluble urethane resin composition using a polyurethane resin (A).

The foregoing alcohol-soluble urethane resin composition was a transparent solution, had a solids content of 30 % by mass and an initial solution viscosity of 9,900 mPa·s (measuring temperature: 25°C) and had a solution viscosity after keeping for 3 months under a room temperature condition of 10,900 mPa·s. Thus, a viscosity rise ratio after keeping for 3 months to the foregoing initial solution viscosity was 1.10, and excellent storage stability was revealed.

However, though physical properties of a film obtained using the foregoing alcohol-soluble urethane resin composition of Comparative Example 10 and resistance to dissolution of a porous body obtained using the same are shown in Table 2, its flow starting temperature of Comparative Example 10 was lower by about 20°C than that in Example 12 having the same composition except for the presence or absence of a hydrolyzable silyl group, so that the heat resistance was inferior.

Also, when the film obtained using the alcohol-soluble urethane resin composition of Comparative Example 10 was dipped in methanol or DMF for 24 hours, the film was completely dissolved, and solvent resistance (alcohol resistance) and chemical resistance (DMF resistance) of the film were remarkably inferior to those of the alcohol-soluble urethane resin having a hydrolyzable silyl group according to the invention.

[Comparative Example 11] In Comparative Example 11, as the first step, the reaction was carried out using the same raw materials, charge amounts and operations as in Example 14, thereby synthesizing a urethane prepolymer (x').

Subsequently, as the second step, 207 g of the foregoing urethane prepolymer (x') was added to a mixture consisting of 20.00 g of isophoronediamine (IPDA), 0.94 g of di(n-butyl)amine and 532 g of isopropyl alcohol (IPA) as the alcohol (B) while stirring, and the mixture was allowed to react at 50°C for 3 hours, thereby obtaining an alcohol-soluble urethane resin composition for moisture-permeable film containing a polyurethane resin (A') (Mn: 180,000).

The foregoing alcohol-soluble urethane resin composition for moisture-permeable film was a transparent solution, had a solids content of 30 % by mass and an initial solution viscosity of 36,000 mPa·s (measuring temperature: 25°C) and had a solution viscosity after keeping for 3 months under a room temperature condition of 38,000 mPa·s. Thus, a viscosity rise ratio after keeping for 3 months to the foregoing initial solution viscosity was 1.06, and excellent storage stability was revealed.

However, though physical properties and moisture permeability of a polyurethane film (film) obtained using the foregoing alcohol-soluble urethane resin composition for moisture-permeable film and resistance to dissolution of a porous body obtained using the same are shown in Table 2, the flow starting temperature of Comparative Example 11 was lower by about 20°C than that in Example 14 having the same composition except for the presence or absence of a hydrolyzable silyl group, so that the heat resistance was extremely inferior.

Also, when the film obtained using the alcohol-soluble urethane resin composition of Comparative Example 11 was dipped in methanol or DMF for 24 hours, the film was completely dissolved, and solvent resistance (alcohol resistance) and chemical resistance (DMF resistance) of the film were remarkably inferior to those of the moisture-permeable film using the alcohol-soluble urethane resin having a hydrolyzable silyl group according to the invention.

[Comparative Example 12] In Comparative Example 12, as the first step, the reaction was carried out using the same raw materials, charge amounts and operations as in Example 14, thereby synthesizing a urethane prepolymer (x').

Subsequently, as the second step, 207 g of the foregoing urethane prepolymer (x') was added to a mixture consisting of 20.00 g of IPDA, 1.61 g of γ-aminopropyltriethoxysilane and 533 g of dimethylformamide (DMF) while stirring, and the mixture was allowed to react at 50°C for 3 hours, thereby obtaining a urethane resin composition of a DMF single solvent system having a hydrolyzable silyl group and containing a polyurethane resin (A') (Mn: 230,000).

The foregoing urethane resin composition of a DMF single solvent system was a transparent solution and had a solids content of 30 % by mass and an initial solution viscosity of 14,000 mPa·s. One month after keeping under a room temperature condition, this urethane resin composition of a DMF single solvent system was gelated so that it was extremely inferior in storage stability to the alcohol-soluble urethane resin for moisture-permeable film obtained in the Example.

Also, physical properties and moisture permeability of a polyurethane film (film) obtained using the foregoing urethane resin composition of a DMF solvent system and resistance to dissolution of a porous body obtained using the same are shown in Table 2. Though physical properties of the film were substantially on the same level as those in the invention, when the urethane resin composition of a DMF solvent system of Comparative Example 12 was coated on a polyurethane porous layer made of XOLTEX PX-300 (manufactured by DIC Corporation) which is a urethane resin for dry porous layer, the porous layer was dissolved and broken, and resistance to dissolution (cell shape retaining properties) of the porous body was extremely inferior to that of the invention.

[Comparative Example 13] In Comparative Example 13, as the first step, the reaction was carried out using the same raw materials, charge amounts and operations as in Example 14, thereby synthesizing a urethane prepolymer (x').

Subsequently, as the second step, 222 g of the foregoing urethane prepolymer (x') was added to a mixture consisting of 20.80 g of IPDA, 0.87 g of N-β-(aminoethyl)-γ-aminopropyltrimethoxysilane, 1.01 g of di(n-butyl)amine and 571 g of DMF while stirring, and the mixture was allowed to react at 50°C for 3 hours, thereby obtaining a urethane resin composition of a DMF single solvent system having a hydrolyzable silyl group and containing a polyurethane resin (A') (Mn: 210,000).

The foregoing urethane resin composition of a DMF single solvent system was a transparent solution and had a solids content of 30 % by mass and an initial solution viscosity of 12,500 mPa·s (measuring temperature: 25°C). One month after keeping under a room temperature condition, this urethane resin composition of a DMF single solvent system was gelated so that it was extremely inferior in storage stability to the alcohol-soluble urethane resin for moisture-permeable film obtained in the Example.

Also, physical properties and moisture permeability of a polyurethane film (film) obtained using the foregoing urethane resin composition of a DMF solvent system and resistance to dissolution of a porous body obtained using the same are shown in Table 2. Though physical properties of the film were substantially on the same level as those in the invention, when the urethane resin composition of a DMF solvent system of Comparative Example 13 was coated on a polyurethane porous layer made of XOLTEX PX-300 (manufactured by DIC Corporation) which is a urethane resin for dry porous layer, the porous layer was dissolved and broken, and resistance to dissolution of the porous body was extremely inferior to that of the invention.

[Comparative Example 14] In Comparative Example 14, as the first step, the reaction was carried out using the same raw materials, charge amounts and operations as in Example 14, thereby synthesizing a urethane prepolymer (x').

Subsequently, as the second step, 217 g of the foregoing urethane prepolymer (x') and 1.95 g of γ-isocyanatopropyltriethoxysilane were added to a mixture consisting of 21.66 g of IPDA, 1.02 g of di(n-butyl)amine and 564 g of DMF while stirring, and the mixture was allowed to react at 50°C for 3 hours, thereby obtaining a urethane resin composition of a DMF single solvent system having a hydrolyzable silyl group and containing a polyurethane resin (A') (Mn: 180,000).

The foregoing urethane resin composition of a DMF single solvent system was a transparent solution and had a solids content of 30 % by mass and an initial solution viscosity of 13,000 mPa·s (measuring temperature: 25°C). One month after keeping under a room temperature condition, this urethane resin composition of a DMF single solvent system was gelated so that it was extremely inferior in storage stability to the alcohol-soluble urethane resin for moisture-permeable film obtained in the Example.

Also, physical properties and moisture permeability of a polyurethane film (film) obtained using the foregoing urethane resin composition of a DMF solvent system and resistance to dissolution of a porous body obtained using the same are shown in Table 2. Though physical properties of the film were substantially on the same level as those in the invention, when the urethane resin composition of a DMF solvent system of Comparative Example 14 was coated on a polyurethane porous layer made of XOLTEX PX-300 (manufactured by DIC Corporation) which is a urethane resin for dry porous layer, the porous layer was dissolved and broken, and resistance to dissolution of the porous body was remarkably inferior to that of the invention.

[Comparative Example 15] As the first step, a reactor equipped with a stirrer, a thermometer and a nitrogen gas inlet pipe was charged with 491 g of dicyclohexylmethane diisocyanate (hydrogenated MDI), 500 g of polyoxyethylene glycol (one having a molecular weight of 2,000) and 500 g of P-1010 (manufactured by Kuraray Co., Ltd.; one having a number average molecular weight of 1,000) which is a polyester diol made of 3-methylpentanediol and adipic acid, and the mixture was allowed to react at 100°C for 6 hours under a nitrogen gas stream in the absence of a solvent, thereby synthesizing a urethane prepolymer (x').

Subsequently, as the second step, 161 g of the foregoing urethane prepolymer (x') was added to a mixture consisting of 20.00 g of IPDA, 0.94 g of di(n-butyl)amine and 425 g of ethanol as the alcohol (B) while stirring, and the mixture was allowed to react at 50°C for 3 hours, thereby obtaining an alcohol-soluble urethane resin composition for moisture-permeable film containing a polyurethane resin (A') (Mn: 170,000).

The foregoing alcohol-soluble urethane resin composition for moisture-permeable film was a transparent solution, had a solids content of 30 % by mass and an initial solution viscosity of 9,000 mPa·s (measuring temperature: 25°C) and had a solution viscosity after keeping for 3 months under a room temperature condition of 8,500 mPa·s. Thus, a viscosity rise ratio after keeping for 3 months to the foregoing initial solution viscosity was 0.94, and excellent storage stability was revealed.

However, though physical properties and moisture permeability of a polyurethane film (film) obtained using the foregoing alcohol-soluble urethane resin composition for moisture-permeable film and resistance to dissolution of a porous body obtained using the same are shown in Table 2, the flow starting temperature of Comparative Example 15 was lower by about 10°C than that in Example 17 having the same composition except for the presence or absence of a hydrolyzable silyl group, so that the heat resistance was poor.

Also, when the film obtained using the alcohol-soluble urethane resin composition for moisture-permeable film of Comparative Example 15 was dipped in methanol or DMF for 24 hours, the film was completely dissolved, and solvent resistance (alcohol resistance) and chemical resistance (DMF resistance) of the film and resistance to dissolution of the porous body were remarkably inferior to those of the invention.

[Comparative Example 16] In Comparative Example 16, as the first step, the reaction was carried out using the same raw materials, charge amounts and operations as in Example 14, thereby synthesizing a urethane prepolymer (x').

Subsequently, as the second step, 207 g of the foregoing urethane prepolymer (x') was added to a mixture consisting of 20.00 g of isophoronediamine (IPDA) and 1.61 g of γ-aminopropyltriethoxysilane while stirring, and the mixture was allowed to react at 50°C for 3 hours. Thereafter, 533 g of DMF was added and dissolved, thereby obtaining an urethane resin composition of a DMF single solvent system having a hydrolyzable silyl group and containing a polyurethane resin (A') (Mn: 220,000).

The foregoing urethane resin composition of a DMF single solvent system was a transparent solution and had a solids content of 30 % by mass and an initial solution viscosity of 12,000 mPa·s. One month after keeping under a room temperature condition, this urethane resin composition of a DMF single solvent system was gelated so that it was extremely inferior in storage stability to the alcohol-soluble urethane resin for moisture-permeable film obtained in the Example.

Also, physical properties and moisture permeability of a polyurethane film (film) obtained using the foregoing urethane resin composition of a DMF solvent system and resistance to dissolution of a porous body obtained using the same are shown in Table 2. Though physical properties of the film were substantially on the same level as those in the invention, when the urethane resin composition of a DMF solvent system of Comparative Example 16 was coated on a polyurethane porous layer made of XOLTEX PX-300 (manufactured by DIC Corporation) which is a urethane resin for dry porous layer, the porous layer was dissolved and broken, and resistance to dissolution (cell shape retaining properties) of the porous body was remarkably inferior to that of the invention.

[Comparative Example 17] In Comparative Example 17, as the first step, the reaction was carried out using the same raw materials, charge amounts and operations as in Example 21, thereby synthesizing a urethane prepolymer (x').

Subsequently, as the second step, 20.00 g of isophoronediamine (IPDA) and 0.94 g of di(n-butyl)amine were added to a mixture consisting of 207 g of the foregoing urethane prepolymer (x') and 532 g of isopropyl alcohol (IPA) as the alcohol (B) while stirring, and the mixture was allowed to react at 50°C for 3 hours, thereby obtaining an alcohol-soluble urethane resin composition for moisture-permeable film containing a polyurethane resin (A') (Mn: 170,000).

The foregoing alcohol-soluble urethane resin composition for moisture-permeable film was a transparent solution, had a solids content of 30 % by mass and an initial solution viscosity of 32,000 mPa·s (measuring temperature: 25°C) and had a solution viscosity after keeping for 3 months under a room temperature condition of 35,000 mPa·s. Thus, a viscosity rise ratio after keeping for 3 months to the foregoing initial solution viscosity was 1.09, and excellent storage stability was revealed.

Also, physical properties and moisture permeability of a polyurethane film (film) obtained using the foregoing alcohol-soluble urethane resin composition for moisture-permeable film and resistance to dissolution of a porous body obtained using the same are shown in Table 2. The flow starting temperature of Comparative Example 17 was lower by about 20°C than that in Example 21 having the same composition except for the presence or absence of a hydrolyzable silyl group, so that the heat resistance was extremely poor.

Also, when the film obtained using the alcohol-soluble urethane resin composition for moisture-permeable film of Comparative Example 17 was dipped in methanol or DMF for 24 hours, the film was completely dissolved, and solvent resistance (alcohol resistance) and chemical resistance (DMF resistance) of the film were remarkably inferior to those of the moisture-permeable film using the alcohol-soluble urethane resin composition for moisture-permeable film having a hydrolyzable silyl group according to the invention.

[Comparative Example 18] In Comparative Example 18, as the first step, the reaction was carried out using the same raw materials, charge amounts and operations as in Example 21, thereby synthesizing a urethane prepolymer (x').

Subsequently, as the second step, 20.00 g of IPDA and 1.61 g of γ-aminopropyltriethoxysilane were added to a mixture consisting of 207 g of the foregoing urethane prepolymer (x') and 533 g of dimethylformamide (DMF) while stirring, and the mixture was allowed to react at 50°C for 3 hours, thereby obtaining a urethane resin composition of a DMF single solvent system having a hydrolyzable silyl group and containing a polyurethane resin (A') (Mn: 250,000).

The foregoing urethane resin composition of a DMF single solvent system was a transparent solution and had a solids content of 30 % by mass and an initial solution viscosity of 17,000 mPa·s. One month after keeping under a room temperature condition, this urethane resin composition of a DMF single solvent system was gelated so that it was extremely inferior in storage stability to the alcohol-soluble urethane resin composition for moisture-permeable film obtained in the Example.

Also, physical properties and moisture permeability of a polyurethane film (film) obtained using the foregoing urethane resin composition of a DMF solvent system and resistance to dissolution of a porous body obtained using the same are shown in Table 2. Though physical properties of the film were substantially on the same level as those in the invention, when the urethane resin composition of a DMF solvent system of Comparative Example 18 was coated on a polyurethane porous layer made of XOLTEX PX-300 (manufactured by DIC Corporation) which is a urethane resin for dry porous layer, the porous layer was dissolved and broken, and resistance to dissolution of the porous body was remarkably inferior to that of the invention.

[Comparative Example 19] In Comparative Example 19, as the first step, the reaction was carried out using the same raw materials, charge amounts and operations as in Example 21, thereby synthesizing a urethane prepolymer (x').

Subsequently, as the second step, 20.80 g of IPDA, 0.87 g of N-β-(aminoethyl)-7-aminopropyltrimethoxysilane and 1.01 g of di(n-butyl)amine were added to a mixture consisting of 222 g of the foregoing urethane prepolymer (x')

and 571 g of dimethylformamide (DMF) while stirring, and the mixture was allowed to react at 50°C for 3 hours, thereby obtaining a urethane resin composition of a DMF single solvent system having a hydrolyzable silyl group and containing a polyurethane resin (A') (Mn: 240,000).

The foregoing urethane resin composition of a DMF single solvent system was a transparent solution and had a solids content of 30 % by mass and an initial solution viscosity of 16,000 mPa·s. One month after keeping under a room temperature condition, this urethane resin composition of a DMF single solvent system was gelated so that it was extremely inferior in storage stability to the alcohol-soluble urethane resin for moisture-permeable film obtained in the Example.

Also, physical properties and moisture permeability of a polyurethane film (film) obtained using the foregoing urethane resin composition of a DMF solvent system and resistance to dissolution of a porous body obtained using the same are shown in Table 2. Though physical properties of the film were substantially on the same level as those in the invention, when the urethane resin composition of a DMF solvent system of Comparative Example 19 was coated on a polyurethane porous layer made of XOLTEX PX-300 (manufactured by DIC Corporation) which is a urethane resin for dry porous layer, the porous layer was dissolved and broken, and resistance to dissolution of the porous body was remarkably inferior to that of the invention.

[Comparative Example 20] In Comparative Example 20, as the first step, the reaction was carried out using the same raw materials, charge amounts and operations as in Example 21, thereby synthesizing a urethane prepolymer (x').

Subsequently, as the second step, 21.66 g of IPDA, 1.02 g of di(n-butyl)amine and 1.95 g of γ-isocyanatopropyltriethoxysilane were added to a mixture consisting of 217 g of the foregoing urethane prepolymer (x') and 564 g of dimethylformamide (DMF) while stirring, and the mixture was allowed to react at 50°C for 3 hours, thereby obtaining a urethane resin composition of a DMF single solvent system having a hydrolyzable silyl group and containing a polyurethane resin (A') (Mn: 175,000).

The foregoing urethane resin composition of a DMF single solvent system was a transparent solution and had a solids content of 30 % by mass and an initial solution viscosity of 17,000 mPa·s (measuring temperature: 25°C). One month after keeping under a room temperature condition, this urethane resin composition of a DMF single solvent system was gelated so that it was extremely inferior in storage stability to the alcohol-soluble urethane resin for moisture-permeable film obtained in the Example.

Also, physical properties and moisture permeability of a polyurethane film (film) obtained using the foregoing urethane resin composition of a DMF solvent system and resistance to dissolution of a porous body obtained using the same are shown in Table 2. Though physical properties of the film were substantially on the same level as those in the invention, when the urethane resin composition of a DMF solvent system of Comparative Example 20 was coated on a polyurethane porous layer made of XOLTEX PX-300 (manufactured by DIC Corporation) which is a urethane resin for dry porous layer, the porous layer was dissolved and broken, and resistance to dissolution of the porous body was remarkably inferior to that of the invention.

[Comparative Example 21] As the first step, a reactor equipped with a stirrer, a thermometer and a nitrogen gas inlet pipe was charged with 500 g of polyoxyethylene glycol (one having a molecular weight of 2,000), 500 g of P-1010 (manufactured by Kuraray Co., Ltd.; one having a number average molecular weight of 1,000) which is a polyester diol made of 3-methylpentanediol and adipic acid and 491 g of dicyclohexylmethane diisocyanate (hydrogenated MDI), and the mixture was allowed to react at 100°C for 6 hours under a nitrogen gas stream in the absence of a solvent, thereby synthesizing a urethane prepolymer (x').

Subsequently, as the second step, 20.00 g of IPDA and 0.94 g of di(n-butyl)amine were added to a mixture consisting of 161 g of the foregoing urethane prepolymer (x') and 425 g of ethanol as the alcohol (B) while stirring, and the mixture was allowed to react at 50°C for 3 hours, thereby obtaining an alcohol-soluble urethane resin composition for moisture-permeable film containing a polyurethane resin (A') (Mn: 150,000).

The foregoing alcohol-soluble urethane resin composition for moisture-permeable film was a transparent solution, had a solids content of 30 % by mass and an initial solution viscosity of 7,000 mPa·s (measuring temperature: 25°C) and had a solution viscosity after keeping for 3 months under a room temperature condition of 6,500 mPa·s. Thus, a viscosity rise ratio after keeping for 3 months to the foregoing initial solution viscosity was 0.93, and excellent storage stability was revealed.

Also, physical properties and moisture permeability of a polyurethane film (film) obtained using the foregoing alcohol-soluble urethane resin composition for moisture-permeable film and resistance to dissolution of a porous body obtained using the same are shown in Table 2. The flow starting temperature of Comparative Example 21 was lower by about 30°C than that in Example 24 having the same composition except for the presence or absence of a hydrolyzable silyl group, so that the heat resistance was inferior.

Also, when the film obtained using the alcohol-soluble urethane resin composition for moisture-permeable film of Comparative Example 21 was dipped in methanol or DMF for 24 hours, the film was completely dissolved, and solvent resistance (alcohol resistance) and chemical resistance (DMF resistance) of the film and resistance to dissolution of the porous body were remarkably inferior to those of the invention.
[Table 1]

| Table 1-1 | Example 1 | Example 2 | Comparative Example 3A | Example 4 | Example 5 | Example 6 |
|---|---|---|---|---|---|---|
| Flow starting temperature (°C) | 203 | 199 | 201 | 196 | 187 | 213 |
| Elongation (%) | 750 | 770 | 740 | 540 | 320 | 498 |
| Alcohol resistance of film | 99.5 | 97.5 | 99.8 | 99.8 | 99.7 | 99.7 |
| DMF resistance of film | 92.5 | 85.5 | 90.1 | 90.5 | 89.2 | 91.3 |
| Cell shape retaining properties of porous body | 5 | 5 | 5 | 5 | 5 | 5 |

[Table 2]

| Table 1-2 | Example 7 |
|---|---|
| Flow starting temperature (°C) | 207 |
| Elongation (%) | 730 |
| Alcohol resistance of film | 99.6 |
| DMF resistance of film | 93.1 |
| Cell shape retaining properties of porous body | 5 |

[Table 3]

| Table 1-3 | Example 8 | Example 9 | Example 10 | Example 11 | Example 12 | Example 13 |
|---|---|---|---|---|---|---|
| Flow starting temperature (°C) | 197 | 191 | 192 | 213 | 175 | 204 |
| Alcohol resistance of film | 98.6 | 95.4 | 98.5 | 99.3 | 96.2 | 99.4 |
| DMF resistance of film | 90.4 | 83.9 | 89.7 | 94.7 | 88.2 | 96.7 |
| Wet pore-forming properties | 3 | 3 | 3 | 3 | 5 | 5 |

[Table 4]

| Table 1-4 | Example 14 | Example 15 | Comparative Example 16A | Example 17 |
|---|---|---|---|---|
| Flow starting temperature (°C) | 175 | 172 | 177 | 187 |
| Elongation (%) | 630 | 680 | 670 | 520 |
| Alcohol resistance of film | 98.8 | 96.3 | 98.3 | 99.2 |

(continued)

| Table 1-4 | Example 14 | Example 15 | Comparative Example 16A | Example 17 |
|---|---|---|---|---|
| DMF resistance of film | 88.8 | 83.2 | 89.6 | 92.4 |
| Cell shape retaining properties of porous body | 5 | 5 | 5 | 5 |
| Moisture permeability of film | 7800 | 7600 | 7400 | 5500 |

[Table 5]

| Table 1-5 | Example 18 | Example 19 | Example 20 |
|---|---|---|---|
| Flow starting temperature (°C) | 180 | 196 | 178 |
| Elongation (%) | 750 | 460 | 620 |
| Alcohol resistance of film | 97.9 | 99.9 | 99.1 |
| DMF resistance of film | 87.5 | 94.2 | 89.4 |
| Cell shape retaining properties of porous body | 5 | 5 | 5 |
| Moisture permeability of film | 5300 | 4900 | 7700 |

[Table 6]

| Table 1-6 | Example 21 | Example 22 | Example 23 |
|---|---|---|---|
| Flow starting temperature (°C) | 171 | 170 | 176 |
| Elongation (%) | 640 | 670 | 660 |
| Alcohol resistance of film | 97.2 | 95.4 | 98.1 |
| DMF resistance of film | 87.2 | 83.4 | 88.8 |
| Cell shape retaining properties of porous body | 5 | 5 | 5 |
| Moisture permeability | 7400 | 7000 | 7100 |

[Table 7]

| Table 1-7 | Example 24 | Example 25 | Example 26 |
|---|---|---|---|
| Flow starting temperature (°C) | 182 | 177 | 193 |
| Elongation (%) | 530 | 790 | 430 |
| Alcohol resistance of film | 98.7 | 97 | 99.2 |
| DMF resistance of film | 91.5 | 87.1 | 94.1 |
| Cell shape retaining properties of porous body | 5 | 5 | 5 |
| Moisture permeability | 5200 | 5200 | 4700 |

[Table 8]

| Table 2-1 | Comparative Example 1 | Comparative Example 2 | Comparative Example 3 | Comparative Example 4 | Comparative Example 5 |
|---|---|---|---|---|---|
| Flow starting temperature (°C) | 183 | 201 | 195 | 193 | 190 |
| Elongation (%) | 720 | 740 | 710 | 520 | 290 |
| Alcohol resistance of film | 0.0 | 99.2 | 92.8 | 98.9 | 0.0 |
| DMF resistance of film | 0.0 | 85.5 | 55.2 | 83.5 | 0.0 |
| Cell shape retaining properties of porous body | 5 | 1 | 2 | 2 | 5 |

[Table 9]

| Table 2-2 | Comparative Example 6 | Comparative Example 7 | Comparative Example 8 | Comparative Example 9 | Comparative Example 10 |
|---|---|---|---|---|---|
| Flow starting temperature (°C) | 171 | 210 | 199 | 201 | 149 |
| Alcohol resistance of film | 0 | 98.9 | 92.1 | 95.1 | 0.0 |
| DMF resistance of film | 0 | 92.3 | 89.0 | 90.9 | 0.0 |
| Wet pore-forming properties | 3 | Gelated | Gelated | Gelated | 3 |

[Table 10]

| Table 2-3 | Comparative Example 11 | Comparative Example 12 | Comparative Example 13 |
|---|---|---|---|
| Flow starting temperature (°C) | 142 | 175 | 174 |
| Elongation (%) | 690 | 610 | 660 |
| Alcohol resistance of film | 0 | 99.1 | 94.2 |
| DMF resistance of film | 0 | 90.2 | 86.2 |
| Cell shape retaining properties of porous body | 5 | 1 | 2 |
| Moisture permeability of film | 7000 | 7200 | 7400 |

[Table 11]

| Table 2-4 | Comparative Example 14 | Comparative Example 15 | Comparative Example 16 |
|---|---|---|---|
| Flow starting temperature (°C) | 169 | 152 | 173 |
| Elongation (%) | 630 | 490 | 600 |
| Alcohol resistance of film | 97.6 | 0 | 98.7 |
| DMF resistance of film | 87.4 | 0 | 90.4 |
| Cell shape retaining properties of porous body | 2 | 5 | 5 |
| Moisture permeability of film | 6900 | 4500 | 7000 |

[Table 12]

| Table 2-5 | Comparative Example 17 | Comparative Example 18 | Comparative Example 19 | Comparative Example 20 | Comparative Example 21 |
|---|---|---|---|---|---|
| Flow starting temperature (°C) | 144 | 181 | 177 | 171 | 148 |
| Elongation (%) | 610 | 580 | 620 | 640 | 490 |
| Alcohol resistance of film | 0 | 99.4 | 96.3 | 98.2 | 0 |
| DMF resistance of film | 0 | 93.2 | 88.7 | 88.9 | 0 |
| Cell shape retaining properties of porous body | 5 | 1 | 2 | 2 | 5 |
| Moisture permeability | 6500 | 7000 | 7200 | 6100 | 4400 |

INDUSTRIAL APPLICABILITY

The invention is concerned with a process for producing an alcohol-soluble urethane resin composition which is excellent in storage stability in an alcohol during custody but which by adding a catalyst (for example, acid catalysts such as phosphoric acid and the like, etc.) to the system during use, coating the mixture, coagulating the coated mixture in water and drying the coating by heating as the need arises, to allow a crosslinking reaction to proceed, thereby forming a film, is capable of forming a porous body having excellent characteristics such as solvent resistance (for example, alcohol resistance), chemical resistance (for example, DMF resistance), heat resistance, elongation and the like. An alcohol-soluble urethane resin composition produced by the process is useful for various applications, for example, polyurethane porous bodies, moisture-permeable films, surface treating agents for synthetic leather, wet synthetic leather porous layers, impregnation layers, synthetic leather surface layers, adhesive layers and the like.

**Claims**

1.   A process for producing an alcohol-soluble urethane resin composition comprising, as a first step, allowing a polyisocyanate (v) and at least one compound (w) having an active hydrogen-containing group selected from polyether polyols, polyester polyols and polycarbonate polyols to react in the absence of a solvent, thereby synthesizing a urethane prepolymer (x) having an isocyanate group in a molecular end thereof; and, as a second step to be subsequently performed, carrying out any one method selected from the following methods:

(Method 1) a method of adding the urethane prepolymer (x) to a mixture composed of a diamine (y), at least one coupling agent (z) selected from a monoamine silane coupling agent, a diamine silane coupling agent and a monoisocyanate silane coupling agent and at least one alcohol (B) selected from alcohols having from 1 to 7 carbon atoms to allow the mixture to react, thereby synthesizing a polyurethane resin (A) having a hydrolyzable silyl group in a molecular end or side chain thereof,

(Method 2) a method of adding the urethane prepolymer (x) to a mixture composed of a diamine (y) and at least one coupling agent (z) selected from a monoamine silane coupling agent, a diamine silane coupling agent and a monoisocyanate silane coupling agent to allow the mixture to react, thereby synthesizing a polyurethane resin (A) having a hydrolyzable silyl group in a molecular end or side chain thereof and then dissolving the polyurethane resin (A) in at least one alcohol (B) selected from alcohols having from 1 to 7 carbon atoms, and

(Method 3) a method of adding a diamine (y) and at least one silane coupling agent (z) selected from a monoamine silane coupling agent, a diamine silane coupling agent and a monoisocyanate silane coupling agent to a mixture composed of the urethane prepolymer (x) and at least one alcohol (B) selected from alcohols having from 1 to 7 carbon atoms to allow the mixture to react, thereby synthesizing a polyurethane resin (A) having a hydrolyzable silyl group in a molecular end or side chain thereof;

wherein the alcohol-soluble urethane resin composition obtained consists essentially of the polyurethane resin (A) and the alcohol (B).

2.  The process for producing an alcohol-soluble urethane resin composition according to claim 1, wherein the second step is carried out in accordance with Method 1.

3.  The process for producing an alcohol-soluble urethane resin composition according to claim 1, wherein the second step is carried out in accordance with Method 2.

4.  The process for producing an alcohol-soluble urethane resin composition according to claim 1, wherein the second step is carried out in accordance with Method 3.

5.  The process for producing an alcohol-soluble urethane resin composition according to any one of the claims 1 to 4, wherein the polyurethane resin (A) is used in a proportion in the range of from 20 to 70 % by mass, and the alcohol (B) is used in a proportion in the range of from 30 to 80 % by mass relative to a total mass [A + B] of the polyurethane resin (A) and the alcohol (B).

6.  The process for producing an alcohol-soluble urethane resin composition according to any one of the claims 1 to 5, wherein the urethane prepolymer (x) is made of, as a raw material, a polyether polyol as the compound (w) having an active hydrogen-containing group.

7.  The process for producing an alcohol-soluble urethane resin composition according to any one of the claims 1 to 6, wherein the monoamine silane coupling agent is at least one member selected from $\gamma$-aminopropyltriethoxysilane and $\gamma$-aminopropyltrimethoxysilane.

8.  The process for producing an alcohol-soluble urethane resin composition according to any one of the claims 1 to 7, wherein the alcohol (B) is an alcohol having a carbon atom number in the range of from 1 to 4.

9.  The process for producing an alcohol-soluble urethane resin composition according to any one of the claims 1 to 8, wherein a reaction temperature of the second step is in the range of from 10 to 50°C.

10. The process for producing an alcohol-soluble urethane resin composition according to any one of the claims 1-9, wherein in the first step, the polyisocyanate (v) and a combination of a compound (w1) having a polyethylene glycol skeleton and a compound (w2) having an active hydrogen-containing group are allowed to react in the absence of a solvent.

11. The process for producing an alcohol-soluble urethane resin composition according to claim 10, wherein the compound (w2) is a polycarbonate polyol.

12. The process for producing an alcohol-soluble urethane resin composition according to any one of the claims 10-11, wherein when the urethane prepolymer (x) is obtained by jointly using the compound (w1) having a polyethylene glycol skeleton and the compound (w2) having an active hydrogen-containing group, the use ratio thereof is in the range of from 0.1/1 to 0.9/1 in terms of the (w1)/(w1 + w2) mass ratio.

13. A polyurethane porous body obtained by performing film deposition using the alcohol-soluble urethane resin composition obtained by the production process according to any one of the claims 1 to 12.

14. The polyurethane porous body according to claim 13, wherein the film deposition is a wet film deposition mode.

15. The polyurethane porous body according to claim 14, wherein the wet film deposition mode includes the addition of a film deposition aid.

16. A moisture-permeable film, which is obtained by, as a first step, allowing a polyisocyanate (v) and a compound (w1) having a polyethylene glycol skeleton or the compound (w1) and at least one compound (w2) having an active hydrogen-containing group selected from polyether polyols, polyester polyols and polycarbonate polyols to react in the absence of a solvent, thereby synthesizing a urethane prepolymer (x) having an isocyanate group in a molecular end thereof; and, as a second step to be subsequently performed, carrying out any one method selected from the following methods:

(Method 1) a method of performing film deposition using an alcohol-soluble urethane resin composition for moisture-permeable film obtained by a production process of adding the urethane prepolymer (x) to a mixture composed of a diamine (y), at least one silane coupling agent (z) selected from a monoamine silane coupling agent, a diamine silane coupling agent and a monoisocyanate silane coupling agent and at least one alcohol (B) selected from alcohols having from 1 to 7 carbon atoms to allow the mixture to react, thereby synthesizing a polyurethane resin (A) having a hydrolyzable silyl group in a molecular end or side chain thereof,

(Method 2) a method of performing film deposition using an alcohol-soluble urethane resin composition for moisture-permeable film obtained by a production process of adding the urethane prepolymer (x') to a mixture composed of a diamine (y) and at least one silane coupling agent (z) selected from a monoamine silane coupling agent, a diamine silane coupling agent and a monoisocyanate silane coupling agent to allow the mixture to react, thereby synthesizing a polyurethane resin (A') having a hydrolyzable silyl group in a molecular end or side chain thereof and then dissolving the polyurethane resin (A') in at least one alcohol (B) selected from alcohols having from 1 to 7 carbon atoms, and

(Method 3) a method of performing film deposition using an alcohol-soluble urethane resin composition for moisture-permeable film obtained by a production process of adding a diamine (y) and at least one silane coupling agent (z) selected from a monoamine silane coupling agent, a diamine silane coupling agent and a monoisocyanate silane coupling agent to a mixture composed of the urethane prepolymer (x') and at least one alcohol (B) selected from alcohols having from 1 to 7 carbon atoms to allow the mixture to react, thereby synthesizing a polyurethane resin (A') having a hydrolyzable silyl group in a molecular end or side chain thereof; wherein the alcohol-soluble urethane resin composition obtained consists essentially of the polyurethane resin (A) and the alcohol (B).

17. The moisture-permeable film according to claim 16, wherein the second step is carried out in accordance with Method 1.

18. The moisture-permeable film according to claim 16, wherein the second step is carried out in accordance with Method 2.

19. The moisture-permeable film according to claim 17, wherein the second step is carried out in accordance with Method 3.

20. The moisture-permeable film according to any one of the claims 16 to 19, which is obtained by performing film deposition using an alcohol-soluble urethane resin composition for moisture-permeable film obtained by compounding from 20 to 70 % by mass of the polyurethane resin (A') and from 30 to 80 % by mass of the alcohol (B) relative to a total mass [A' + B] of the polyurethane resin (A') and the alcohol (B).

21. The process for producing an alcohol-soluble urethane resin composition according to any one of the claims 16-20, wherein the compound (w2) is a polycarbonate polyol.

22. The moisture-permeable film according to any one of the claims 16 to 21, wherein when the urethane prepolymer (x') is obtained by jointly using the compound (w1) having a polyethylene glycol skeleton and the compound (w2) having an active hydrogen-containing group, a use ratio thereof is in the range of from 0.1/1 to 0.9/1 in terms of a (w1)/(w1 + w2) mass ratio.

23. The moisture-permeable film according to any one of the claims 16 to 22, wherein the urethane prepolymer (x') is made of, as a raw material, a polyether polyol as the compound (w2) having an active hydrogen-containing group.

24. The moisture-permeable film according to any one of the claims 16 to 23, wherein the monoamine silane coupling agent is γ-aminopropyltriethoxysilane and/or γ-aminopropyltrimethoxysilane.

25. The moisture-permeable film according to any one of the claims 16 to 24, wherein the alcohol (B) is an alcohol having a carbon atom number in the range of from 1 to 4.

26. The moisture-permeable film according to any one of the claims 16 to 25, wherein a reaction temperature of the second step is in the range of from 10 to 50°C.

27. The moisture-permeable film according to any one of the claims 16 to 26, wherein the film deposition is one in a wet film deposition mode.

28. The moisture-permeable film according to claim 27, wherein the wet film deposition mode includes the addition of a film deposition aid.


**Patentansprüche**

1. Verfahren zum Herstellen einer alkohollöslichen Urethanharzzusammensetzung, umfassend als einen ersten Schritt das Reagierenlassen eines Polyisocyanats (v) und mindestens einer Verbindung (w), die eine aktive wasserstoffhaltige Gruppe aufweist, die ausgewählt ist aus Polyolen, Polyesterpolyolen und Polycarbonatpolyolen, ohne ein Lösungsmittel, wodurch ein Urethanpräpolymer (x) synthetisiert wird, das eine Isocyanatgruppe in einem Molekülende davon aufweist; und als einen zweiten, danach auszuführenden Schritt das Ausführen eines Verfahrens, das aus den folgenden Verfahren ausgewählt ist:

(Verfahren 1) einem Verfahren zum Zugeben des Urethanpräpolymers (x) zu einer Mischung, die aus einem Diamin (y), mindestens einem Haftvermittler (z), der ausgewählt ist aus einem Monoaminsilan-Haftvermittler, einem Diaminsilan-Haftvermittler und einem Monoisocyanat-Haftvermittler, und mindestens einem Alkohol (B) zusammengesetzt ist, der ausgewählt ist aus Alkoholen mit 1 bis 7 Kohlenstoffatomen, um die Mischung reagieren zu lassen, wodurch ein Polyurethanharz (A) mit einer hydrolysierbaren Silylgruppe in einem Molekülende oder einer Seitenkette davon synthetisiert wird,
(Verfahren 2) einem Verfahren zum Zugeben des Urethanpräpolymers (x) zu einer Mischung, die aus einem Diamin (y) und mindestens einem Haftvermittler (z), der ausgewählt ist aus einem Monoaminsilan-Haftvermittler, einem Diaminsilan-Haftvermittler und einem Monoisocyanat-Haftvermittler, zusammengesetzt ist, um die Mischung reagieren zu lassen, wodurch ein Polyurethanharz (A) mit einer hydrolysierbaren Silylgruppe in einem Molekülende oder einer Seitenkette davon synthetisiert wird, und danach Auflösen des Polyurethanharzes (A) in mindestens einem Alkohol (B), der ausgewählt ist aus Alkoholen mit 1 bis 7 Kohlenstoffatomen, und
(Verfahren 3) einem Verfahren zum Zugeben eines Diamins (y) und mindestens eines Silan-Haftvermittlers (z), der ausgewählt ist aus einem Monoaminsilan-Haftvermittler, einem Diaminsilan-Haftvermittler und einem Monoisocyanat-Haftvermittler, zu einer Mischung, die aus dem Urethanpräpolymer (x) und mindestens einem Alkohol (B) zusammengesetzt ist, der ausgewählt ist aus Alkoholen mit 1 bis 7 Kohlenstoffatomen, um die Mischung reagieren zu lassen, wodurch ein Polyurethanharz (A) mit einer hydrolysierbaren Silylgruppe in einem Molekülende oder einer Seitenkette davon synthetisiert wird;
wobei die alkohollösliche Urethanharzzusammensetzung im Wesentlichen aus dem Polyurethanharz (A) und dem Alkohol (B) besteht.

2. Verfahren zum Herstellen einer alkohollöslichen Urethanharzzusammensetzung nach Anspruch 1, wobei der zweite Schritt gemäß Verfahren 1 ausgeführt wird.

3. Verfahren zum Herstellen einer alkohollöslichen Urethanharzzusammensetzung nach Anspruch 1, wobei der zweite Schritt gemäß Verfahren 2 ausgeführt wird.

4. Verfahren zum Herstellen einer alkohollöslichen Urethanharzzusammensetzung nach Anspruch 1, wobei der zweite Schritt gemäß Verfahren 3 ausgeführt wird.

5. Verfahren zum Herstellen einer alkohollöslichen Urethanharzzusammensetzung nach einem der Ansprüche 1 bis 4, wobei das Polyurethanharz (A) bezogen auf die Gesamtmasse [A + B] des Polyurethanharzes (A) und des Alkohols (B) in einem Verhältnis im Bereich von 20 bis 70 Ma% verwendet wird und der Alkohol (B) in einem Verhältnis im Bereich von 30 bis 80 Ma% verwendet wird.

6. Verfahren zum Herstellen einer alkohollöslichen Urethanharzzusammensetzung nach einem der Ansprüche 1 bis 5, wobei das Urethanpräpolymer (x) als Rohmaterial aus einem Polyetherpolyol als die Verbindung (w) mit einer aktiven wasserstoffhaltigen Gruppe hergestellt wird.

7. Verfahren zum Herstellen einer alkohollöslichen Urethanharzzusammensetzung nach einem der Ansprüche 1 bis 6, wobei der Monoaminsilan-Haftvermittler mindestens ein Element ist, das ausgewählt ist aus γ-Aminopropyltriethoxysilan und γ-Aminopropyltrimethoxysilan.

8. Verfahren zum Herstellen einer alkohollöslichen Urethanharzzusammensetzung nach einem der Ansprüche 1 bis 7, wobei der Alkohol (B) ein Alkohol mit einer Kohlenstoffatomzahl im Bereich von 1 bis 4 ist.

9. Verfahren zum Herstellen einer alkohollöslichen Urethanharzzusammensetzung nach einem der Ansprüche 1 bis 8, wobei eine Reaktionstemperatur des zweiten Schrittes im Bereich von 10 bis 50 °C liegt.

10. Verfahren zum Herstellen einer alkohollöslichen Urethanharzzusammensetzung nach einem der Ansprüche 1 bis 9, wobei das Polyisocyanat (v) und eine Kombination einer Verbindung (w1) mit einem Polyethylenglykolgerüst und einer Verbindung (w2) mit einer aktiven wasserstoffhaltigen Gruppe in dem ersten Schritt ohne ein Lösungsmittel umgesetzt werden.

11. Verfahren zum Herstellen einer alkohollöslichen Urethanharzzusammensetzung nach Anspruch 10, wobei die Verbindung (w2) ein Polycarbonatpolyol ist.

12. Verfahren zum Herstellen einer alkohollöslichen Urethanharzzusammensetzung nach einem der Ansprüche 10 bis 11, wobei, wenn das Urethanpräpolymer (x) durch die gemeinsame Verwendung der Verbindung (w1) mit einem Polyethylenglykolgerüst und der Verbindung (w2) mit einer aktiven wasserstoffhaltigen Gruppe erhalten wird, das Verwendungsverhältnis davon bezogen auf das Massenverhältnis (w1)/(w1 + w2) im Bereich von 0,1/1 zu 0,9/1 liegt.

13. Poröser Polyurethankörper, der durch Ausführen einer Filmabscheidung unter Verwendung der alkohollöslichen Urethanharzzusammensetzung erhalten wird, die durch das Herstellungsverfahren nach einem der Ansprüche 1 bis 12 erhalten wird.

14. Poröser Polyurethankörper nach Anspruch 13, wobei die Filmabscheidung in einem Nassfilmabscheidungsmodus stattfindet.

15. Poröser Polyurethankörper nach Anspruch 14, wobei der Nassfilmabscheidungsmodus die Zugabe eines Filmabscheidungshilfsmittels beinhaltet.

16. Feuchtigkeitsdurchlässiger Film, der als einen ersten Schritt durch Reagierenlassen eines Polyisocyanats (v) und einer Verbindung (w1) mit einem Polyethylenglykolgerüst oder der Verbindung (w1) und mindestens einer Verbindung (w2) mit einer aktiven wasserstoffhaltigen Gruppe, die ausgewählt ist aus Polyetherpolyolen, Polyesterpolyolen und Polycarbonatpolyolen, ohne ein Lösungsmittel, wodurch ein Urethanpräpolymer (x') mit einer Isocyanatgruppe in einem Molekülende davon synthetisiert wird, und als einen zweiten, danach auszuführenden Schritt durch das Ausführen eines Verfahrens erhalten wird, das aus den folgenden Verfahren ausgewählt ist:

(Verfahren 1) einem Verfahren zum Ausführen einer Filmabscheidung unter Verwendung einer alkohollöslichen Urethanharzzusammensetzung für einen feuchtigkeitsdurchlässigen Film, der durch ein Herstellungsverfahren des Zugebens des Urethanpräpolymers (x') zu einer Mischung erhalten wird, die aus einem Diamin (y), mindestens einem Silan-Haftvermittler (z), der ausgewählt ist aus einem Monoaminsilan-Haftvermittler, einem Diaminsilan-Haftvermittler und einem Monoisocyanat-Haftvermittler, und mindestens einem Alkohol (B) zusammengesetzt ist, der ausgewählt ist aus Alkoholen mit 1 bis 7 Kohlenstoffatomen, um die Mischung reagieren zu lassen, wodurch ein Polyurethanharz (A') mit einer hydrolysierbaren Silylgruppe in einem Molekülende oder einer Seitenkette davon synthetisiert wird,

(Verfahren 2) einem Verfahren zum Ausführen einer Filmabscheidung unter Verwendung einer alkohollöslichen Urethanharzzusammensetzung für einen feuchtigkeitsdurchlässigen Film, der durch ein Herstellungsverfahren des Zugebens des Urethanpräpolymers (x') zu einer Mischung erhalten wird, die aus einem Diamin (y), mindestens einem Silan-Haftvermittler (z), der ausgewählt ist aus einem Monoaminsilan-Haftvermittler, einem Diaminsilan-Haftvermittler und einem Monoisocyanat-Haftvermittler, zusammengesetzt ist, um die Mischung reagieren zu lassen, wodurch ein Polyurethanharz (A') mit einer hydrolysierbaren Silylgruppe in einem Molekülende oder einer Seitenkette davon synthetisiert wird, und danach Auflösen des Polyurethanharzes (A') in mindestens einem Alkohol (B), der ausgewählt ist aus Alkoholen mit 1 bis 7 Kohlenstoffatomen, und

(Verfahren 3) einem Verfahren zum Ausführen einer Filmabscheidung unter Verwendung einer alkohollöslichen Urethanharzzusammensetzung für einen feuchtigkeitsdurchlässigen Film, der durch ein Herstellungsverfahren des Zugebens eines Diamins (y) und mindestens eines Silan-Haftvermittlers (z), der ausgewählt ist aus einem Monoaminsilan-Haftvermittler, einem Diaminsilan-Haftvermittler und einem Monoisocyanat-Haftvermittler, zu einer Mischung erhalten wird, die aus dem Urethanpräpolymer (x') und mindestens einem Alkohol (B) zusammengesetzt ist, der ausgewählt ist aus Alkoholen mit 1 bis 7 Kohlenstoffatomen, um die Mischung reagieren zu lassen, wodurch ein Polyurethanharz (A') mit einer hydrolysierbaren Silylgruppe in einem Molekülende oder einer Seitenkette davon synthetisiert wird;

wobei die alkohollösliche Urethanharzzusammensetzung im Wesentlichen aus dem Polyurethanharz (A) und dem Alkohol (B) besteht.

17. Feuchtigkeitsdurchlässiger Film nach Anspruch 16, wobei der zweite Schritt gemäß Verfahren 1 ausgeführt wird.

18. Feuchtigkeitsdurchlässiger Film nach Anspruch 16, wobei der zweite Schritt gemäß Verfahren 2 ausgeführt wird.

19. Feuchtigkeitsdurchlässiger Film nach Anspruch 17, wobei der zweite Schritt gemäß Verfahren 3 ausgeführt wird.

20. Feuchtigkeitsdurchlässiger Film nach einem der Ansprüche 16 bis 19, der durch Ausführen einer Filmabscheidung unter Verwendung einer alkohollöslichen Urethanharzzusammensetzung für den feuchtigkeitsdurchlässigen Film erhalten wird, der durch Compoundieren von 20 bis 70 Ma% des Polyurethanharzes (A') und von 30 bis 80 Ma% des Alkohols (B) bezogen auf die Gesamtmasse [A' + B] des Polyurethanharzes (A') und des Alkohols (B) erhalten wird.

21. Verfahren zum Herstellen einer alkohollöslichen Urethanharzzusammensetzung nach einem der Ansprüche 16 bis 20, wobei die Verbindung (w2) ein Polycarbonatpolyol ist.

22. Feuchtigkeitsdurchlässiger Film nach einem der Ansprüche 16 bis 21, wobei, wenn das Urethanpräpolymer (x') durch die gemeinsame Verwendung der Verbindung (w1) mit einem Polyethylenglykolgerüst und der Verbindung (w2) mit einer aktiven wasserstoffhaltigen Gruppe erhalten wird, ein Verwendungsverhältnis davon bezogen auf das Massenverhältnis (w1)/(w1 + w2) im Bereich von 0,1/1 zu 0,9/1 liegt.

23. Feuchtigkeitsdurchlässiger Film nach einem der Ansprüche 16 bis 22, wobei das Urethanpräpolymer (x') als Rohmaterial aus einem Polyetherpolyol als die Verbindung (w2) mit einer aktiven wasserstoffhaltigen Gruppe hergestellt wird.

24. Feuchtigkeitsdurchlässiger Film nach einem der Ansprüche 16 bis 23, wobei der Monoaminsilan-Haftvermittler γ-Aminopropyltriethoxysilan und/oder γ-Aminopropyltrimethoxysilan ist.

25. Feuchtigkeitsdurchlässiger Film nach einem der Ansprüche 16 bis 24, wobei der Alkohol (B) ein Alkohol mit einer Kohlenstoffatomzahl im Bereich von 1 bis 4 ist.

26. Feuchtigkeitsdurchlässiger Film nach einem der Ansprüche 16 bis 25, wobei eine Reaktionstemperatur des zweiten Schrittes im Bereich von 10 bis 50 °C liegt.

27. Feuchtigkeitsdurchlässiger Film nach einem der Ansprüche 16 bis 26, wobei die Filmabscheidung in einem Nassfilmabscheidungsmodus stattfindet.

28. Feuchtigkeitsdurchlässiger Film nach einem der Ansprüche nach Anspruch 27, wobei der Nassfilmabscheidungsmodus die Zugabe eines Filmabscheidungshilfsmittels beinhaltet.

**Revendications**

1. Procédé de production d'une composition de résine d'uréthane soluble dans un alcool comprenant, comme première étape, la réaction d'un polyisocyanate (v) et d'au moins un composé (w) ayant un groupe actif contenant un hydrogène choisi parmi les polyols de polyéther, les polyols de polyester et les polyols de polycarbonate en l'absence d'un solvant, synthétisant ainsi un prépolymère d'uréthane (x) ayant un groupe isocyanate dans une extrémité moléculaire de celui-ci ; et, comme seconde étape, à réaliser par la suite, la réalisation de l'un quelconque des procédés choisis parmi les procédés suivantes :

(Procédé 1) un procédé d'ajout du prépolymère d'uréthane (x) à un mélange se composant d'une diamine (y), d'au moins un agent de couplage (z) choisi parmi un agent de couplage de monoamine silane, un agent de couplage de diamine silane et un agent de couplage de monoisocyanate silane et d'au moins un alcool (B) choisi parmi les alcools ayant de 1 à 7 atomes de carbone pour permettre au mélange de réagir, synthétisant ainsi une résine de polyuréthane (A) ayant un groupe silyle hydrolysable dans une extrémité moléculaire ou une chaîne latérale de celui-ci,

(Procédé 2) un procédé d'ajout du prépolymère d'uréthane (x) à un mélange se composant d'une diamine (y) et d'au moins un agent de couplage (z) choisi parmi un agent de couplage de monoamine silane, un agent de couplage de diamine silane et un agent de couplage de monoisocyanate silane pour permettre au mélange de réagir, synthétisant ainsi une résine de polyuréthane (A) ayant un groupe silyle hydrolysable dans une extrémité moléculaire ou une chaîne latérale de celui-ci, puis de dissolution de la résine de polyuréthane (A) dans au moins un alcool (B) choisi parmi les alcools ayant de 1 à 7 atomes de carbone, et

(Procédé 3) un procédé d'ajout d'une diamine (y) et d'au moins un agent de couplage (z) choisi parmi un agent de couplage de monoamine silane, un agent de couplage de diamine silane et un agent de couplage de monoisocyanate silane à une mélange se composant du prépolymère d'uréthane (x) et d'au moins un alcool (B) choisi parmi les alcools ayant de 1 à 7 atomes de carbone pour permettre au mélange de réagir, synthétisant ainsi une résine de polyuréthane (A) ayant un groupe silyle hydrolysable dans une extrémité moléculaire ou une chaîne latérale de celui-ci ;

dans lequel la composition de résine d'uréthane soluble dans un alcool obtenue se compose essentiellement de la résine de polyuréthane (A) et de l'alcool (B).

2. Procédé de production d'une composition de résine d'uréthane soluble dans un alcool selon la revendication 1, dans lequel la seconde étape est réalisée selon le procédé 1.

3. Procédé de production d'une composition de résine d'uréthane soluble dans un alcool selon la revendication 1, dans lequel la seconde étape est réalisée selon le procédé 2.

4. Procédé de production d'une composition de résine d'uréthane soluble dans un alcool selon la revendication 1, dans lequel la seconde étape est réalisée selon le procédé 3.

5. Procédé de production d'une composition de résine d'uréthane soluble dans un alcool selon l'une quelconque des revendications 1 à 4, dans lequel la résine de polyuréthane (A) est utilisée en une proportion comprise dans la plage allant de 20 à 70 % en poids, et l'alcool (B) est utilisé en une proportion comprise dans la plage allant de 30 à 80 % en poids par rapport au poids total [A + B] de la résine de polyuréthane (A) et de l'alcool (B).

6. Procédé de production d'une composition de résine d'uréthane soluble dans un alcool selon l'une quelconque des revendications 1 à 5, dans lequel le prépolymère d'uréthane (x) est constitué, comme matière première, d'un polyol de polyéther en tant que composé (w) ayant un groupe actif contenant un hydrogène.

7. Procédé de production d'une composition de résine d'uréthane soluble dans un alcool selon l'une quelconque des revendications 1 à 6, dans lequel l'agent de couplage de monoamine silane est au moins un élément choisi parmi le γ-aminopropyltriéthoxysilane et le γ-aminopropyltriméthoxysilane.

8. Procédé de production d'une composition de résine d'uréthane soluble dans un alcool selon l'une quelconque des revendications 1 à 7, dans lequel l'alcool (B) est un alcool ayant un nombre d'atomes de carbone compris dans la plage allant de 1 à 4.

**9.** Procédé de production d'une composition de résine d'uréthane soluble dans un alcool selon l'une quelconque des revendications 1 à 8, dans lequel une température de réaction de la seconde étape est comprise dans la plage allant de 10 à 50 °C.

**10.** Procédé de production d'une composition de résine d'uréthane soluble dans un alcool selon l'une quelconque des revendications 1 à 9, dans lequel dans la première étape, le polyisocyanate (v) et une combinaison d'un composé (w1) ayant un squelette de polyéthylène glycol et un composé (w2) ayant un groupe actif contenant un hydrogène sont mis à réagir en l'absence d'un solvant.

**11.** Procédé de production d'une composition de résine d'uréthane soluble dans un alcool selon la revendication 10, dans lequel le composé (w2) est un polyol de polycarbonate.

**12.** Procédé de production d'une composition de résine d'uréthane soluble dans un alcool selon l'une quelconque des revendications 10 à 11, dans lequel le prépolymère d'uréthane (x) est obtenu en utilisant conjointement le composé (w1) ayant un squelette de polyéthylène glycol et le composé (w2) ayant un groupe actif contenant un hydrogène, le rapport d'utilisation de ces derniers est compris dans la plage allant de 0,1/1 à 0,9/1 en termes de rapport pondéral (w1)/(w1 + w2).

**13.** Corps poreux en polyuréthane obtenu par la réalisation d'un dépôt de film en utilisant la composition de résine d'uréthane soluble dans un alcool obtenue par le procédé de production selon l'une quelconque des revendications 1 à 12.

**14.** Corps poreux en polyuréthane selon la revendication 13, dans lequel le dépôt de film est un mode de dépôt de film humide.

**15.** Corps poreux en polyuréthane selon la revendication 14, dans lequel le mode de dépôt de film humide comprend l'ajout d'un auxiliaire de dépôt de film.

**16.** Film perméable à l'humidité, qui est obtenu par, comme première étape, la réaction d'un polyisocyanate (v) et d'un composé (w1) ayant un squelette de polyéthylène glycol ou du composé (w1) et d'au moins un composé (W2) groupe actif contenant un hydrogène choisi parmi les polyols de polyéther, les polyols de polyester et les polyols de polycarbonate en l'absence d'un solvant, synthétisant ainsi un prépolymère d'uréthane (x') ayant un groupe isocyanate dans une extrémité moléculaire de celui-ci ; et, comme seconde étape, à réaliser par la suite, la réalisation de l'un quelconque des procédé choisis parmi les procédés suivantes :

(Procédé 1) un procédé de réalisation d'un dépôt de film en utilisant une composition de résine d'uréthane soluble dans un alcool pour un film perméable à l'humidité obtenue par un procédé de production consistant à ajouter le prépolymère d'uréthane (x') à un mélange se composant d'une diamine (y), d'au moins un agent de couplage de silane (z) choisi parmi un agent de couplage de monoamine silane, un agent de couplage de diamine silane et un agent de couplage de monoisocyanate silane et d'au moins un alcool (B) choisi parmi les alcools ayant de 1 à 7 atomes de carbone pour permettre au mélange de réagir, synthétisant ainsi une résine de polyuréthane (A') ayant un groupe silyle hydrolysable dans une extrémité moléculaire ou une chaîne latérale de celui-ci,

(Procédé 2) un procédé de réalisation d'un dépôt de film en utilisant une composition de résine d'uréthane soluble dans un alcool pour un film perméable à l'humidité obtenue par un procédé de production consistant à ajouter le prépolymère d'uréthane (x') à un mélange se composant d'une diamine (y) et d'au moins un agent de couplage de silane (z) choisi parmi un agent de couplage de monoamine silane, un agent de couplage de diamine silane et un agent de couplage de monoisocyanate silane pour permettre au mélange de réagir, synthétisant ainsi une résine de polyuréthane (A') ayant un groupe silyle hydrolysable dans une extrémité moléculaire ou une chaîne latérale de celui-ci, puis à dissoudre la résine de polyuréthane (A') dans au moins un alcool (B) choisi parmi les alcools ayant de 1 à 7 atomes de carbone, et

(Procédé 3) un procédé de réalisation d'un dépôt de film en utilisant une composition de résine d'uréthane soluble dans un alcool pour un film perméable à l'humidité obtenue par un procédé de production consistant à ajouter une diamine (y) et au moins un agent de couplage de silane (z) choisi parmi un agent de couplage de monoamine silane, un agent de couplage de diamine silane et un agent de couplage de monoisocyanate silane à une mélange se composant du prépolymère d'uréthane (x') et d'au moins un alcool (B) choisi parmi les alcools ayant de 1 à 7 atomes de carbone pour permettre au mélange de réagir, synthétisant ainsi une résine de polyuréthane (A') ayant un groupe silyle hydrolysable dans une extrémité moléculaire ou une chaîne latérale de celui-ci ;
dans lequel la composition de résine d'uréthane soluble dans un alcool obtenue se compose essentiellement de la résine de polyuréthane (A') et de l'alcool (B).

17. Film perméable à l'humidité selon la revendication 16, dans lequel la seconde étape est réalisée selon le procédé 1.

18. Film perméable à l'humidité selon la revendication 16, dans lequel la seconde étape est réalisée selon le procédé 2.

19. Film perméable à l'humidité selon la revendication 16, dans lequel la seconde étape est réalisée selon le procédé 3.

20. Film perméable à l'humidité selon l'une quelconque des revendications 16 à 19, qui est obtenu en réalisant un dépôt de film en utilisant une composition de résine d'uréthane soluble dans un alcool pour un film perméable obtenue en mélangeant de 20 à 70 % en poids de la résine de polyuréthane (A') et de 30 à 80 % en poids de l'alcool (B) par rapport au poids total [A' + B] de la résine de polyuréthane (A') et de l'alcool (B).

21. Procédé de production d'une composition de résine d'uréthane soluble dans un alcool selon l'une quelconque des revendications 16 à 20, dans lequel le composé (w2) est un polyol de polycarbonate.

22. Film perméable à l'humidité selon l'une quelconque des revendications 16 à 21, dans lequel lorsque le prépolymère d'uréthane (x') est obtenu en utilisant conjointement le composé (w1) ayant un squelette de polyéthylène glycol et le composé (w2) ayant un groupe actif contenant un hydrogène, un rapport d'utilisation de ces derniers est compris dans la plage allant de 0,1/1 à 0,9/1 en termes de rapport pondéral (w1)/(w1 + w2).

23. Film perméable à l'humidité selon l'une quelconque des revendications 16 à 22, dans lequel le prépolymère d'uréthane (x') est constitué, comme matière première, d'un polyol de polyéther en tant que composé (w2) ayant un groupe actif contenant un hydrogène.

24. Film perméable à l'humidité selon l'une quelconque des revendications 16 à 23, dans lequel l'agent de couplage de monoamine silane est au moins un élément choisi parmi le $\gamma$-aminopropyltriéthoxysilane et le $\gamma$-aminopropyltriméthoxysilane.

25. Film perméable à l'humidité selon l'une quelconque des revendications 16 à 24, dans lequel l'alcool (B) est un alcool ayant un nombre d'atomes de carbone compris dans la plage allant de 1 à 4.

26. Film perméable à l'humidité selon l'une quelconque des revendications 16 à 25, dans lequel une température de réaction de la seconde étape est comprise dans la plage allant de 10 à 50 °C.

27. Film perméable à l'humidité selon l'une quelconque des revendications 16 à 26, dans lequel le dépôt de film est un mode de dépôt de film humide.

28. Film perméable à l'humidité selon la revendication 27, dans lequel le mode de dépôt de film humide comprend l'ajout d'un auxiliaire de dépôt de film.

**EP 2 248 857 B1**

**Patent documents cited in the description**

- JP 10060783 A
- JP 11060936 A
- JP 2001270985 A